# EUROPÄISCHE PATENTSCHRIFT

(11) **EP 3 306 514 B1**
(45) Veröffentlichungstag und Bekanntmachung des Hinweises auf die Patenterteilung: **24.04.2019**
(21) Anmeldenummer: 17184644.7
(22) Anmeldetag: 03.08.2017
(51) Int. Cl.: G06F 21/60, H04L 29/06, G06F 21/33

(54) **VERFAHREN UND VORRICHTUNG ZUM ZERTIFIZIEREN EINER SICHERHEITSKRITISCHEN FUNKTIONSKETTE**
METHOD AND DEVICE FOR CERTIFICATION OF A SAFETY CRITICAL FUNCTION CHAIN
PROCÉDÉ ET DISPOSITIF DE CERTIFICATION D'UNE CHAÎNE DE FONCTIONS CRITIQUE POUR LA SÉCURITÉ

(30) Priorität: 04.10.2016 DE 102016219207
(43) Veröffentlichungstag der Anmeldung: 11.04.2018
(73) Patentinhaber: MBDA Deutschland GmbH, 86529 Schrobenhausen (DE)
(72) Erfinder: WAGNER, Dieter, 85591 Vaterstetten (DE)
(74) Vertreter: Isarpatent

(56) Entgegenhaltungen:
- DE-A1-102011 108 003
- US-A1- 2014 337 632

## Beschreibung

Die Erfindung betrifft ein Verfahren und eine Vorrichtung zum Zertifizieren einer sicherheitskritischen Funktionskette, die mehrere miteinander über Kommunikationsverbindungen verkettete Komponenten zur Bereitstellung einer Sicherheitsfunktion aufweist.

Systeme, die sicherheitskritische Funktionsketten umfassen, können eine Vielzahl von Komponenten aufweisen. Um sicherheitskritische Funktionsketten zu zertifizieren bzw. zu rezertifizieren, wird eine Zertifizierung durch eine Zertifizierungsstelle durchgeführt. Die Zertifizierung eines Produktes bzw. einer Komponente wird auf Veranlassung des Herstellers oder eines Vertreibers durchgeführt. Herkömmliche Zertifizierungsverfahren umfassen die technische Prüfung bzw. Evaluierung der Komponenten gemäß vorgegebener Kriterien. Die technische Prüfung kann von einer Prüfstelle durchgeführt werden, die von der Zertifizierungsstelle anerkannt ist. Dabei wird die Erfüllung von Anforderungen an das jeweilige Produkt bzw. die jeweilige Komponente, an die Entwicklungsumgebung, an die Anwenderdokumentation sowie an den Betrieb der jeweiligen Komponente geprüft. Die Dauer eines Zertifizierungsverfahrens ist abhängig von der Komplexität der jeweiligen Komponenten und einer Prüftiefe. Das Ergebnis des Zertifizierungsverfahrens wird in einem Zertifizierungsreport festgehalten. Dieser Zertifizierungsreport enthält u.a. ein Sicherheitszertifikatsdokument und einen detaillierten Zertifizierungsbericht. Bei sicherheitsrelevanten Änderungen einer Komponente oder an Entwicklungsprozessen der Komponente ist eine erneute Zertifizierung bzw. Rezertifizierung der Komponente erforderlich. Bei jeder Änderung innerhalb einer sicherheitskritischen Funktionskette, die mehrere miteinander verkettete Komponenten umfasst, verfällt die Betriebserlaubnis für die gesamte sicherheitskritische Funktionskette, die dann nur durch eine aufwendige Rezertifizierung wiedererlangt werden kann.

Die Druckschrift DE 10 2011 offenbart ein Prozessleitsystem, bei dem die Integrität der Kommunikation von Netzwerkteilnehmern des Prozessleitsystems über den Austausch von Zertifikaten gewährleistet wird. Die Druckschrift US 2014/0337632 A1 offenbart ein Verteilernetzwerk für Sicherheitszertifikate, welches gerätebasierte Sicherheitslevel überprüfen kann.

Es ist daher eine Aufgabe der vorliegenden Erfindung, die Zertifizierung bzw. Rezertifizierung einer sicherheitskritischen Funktionskette zu vereinfachen.

Diese Aufgabe wird durch ein Verfahren zum Zertifizieren einer sicherheitskritischen Funktionskette, die mehrere verkettete Komponenten zur Bereitstellung einer Sicherheitsfunktion aufweist, mit den folgenden Schritten gelöst, nämlich: Prüfen von Komponentenzertifikaten der verketteten Komponenten durch einen Sicherheitszertifikatsmanager anhand vorgegebener Sicherheitsanforderungen, Prüfen von Schnittstellenzertifikaten von Komponentenschnittstellen der miteinander verketteten Komponenten durch den Sicherheitszertifikatsmanager und Freigeben von Komponenten der sicherheitskritischen Funktionskette durch den Sicherheitszertifikatsmanager, falls die Komponentenzertifikatsprüfung und die Schnittstellenzertifikatsprüfung erfolgreich sind.

Ein Vorteil des erfindungsgemäßen Verfahrens besteht darin, dass die Zertifizierung von sicherheitsrelevanten Komponenten innerhalb einer sicherheitskritischen Funktionskette weitestgehend bzw. vollständig automatisiert erfolgen kann. Hierdurch wird die Zertifizierung bzw. Rezertifizierung einer komplexen sicherheitskritischen Funktionskette erheblich vereinfacht und gleichzeitig der Zertifizierungsprozess verkürzt.

Bei einer möglichen Ausführungsform des erfindungsgemäßen Verfahrens zum Zertifizieren einer sicherheitskritischen Funktionskette gemäß einem ersten Aspekt der Erfindung ist die Kommunikationsverbindung zwischen zwei Komponentenschnittstellen zweier innerhalb der sicherheitskritischen Funktionskette benachbarter Komponenten drahtlos oder drahtgebunden. Bei einer weiteren möglichen Ausführungsform des erfindungsgemäßen Verfahrens gibt das Schnittstellenzertifikat einer Komponentenschnittstelle mindestens ein Schnittstellensicherheitslevel der Komponentenschnittstelle an.

Erfindungsgemäß werden im Zuge der Schnittstellenzertifikatsprüfung die Schnittstellensicherheitszertifikate der beiden über eine Kommunikationsverbindung verbundenen Komponentenschnittstellen von zwei innerhalb der sicherheitskritischen Funktionskette benachbarter Komponenten dahingehend geprüft, ob die darin jeweils angegebenen Schnittstellensicherheitslevel zueinander kompatibel sind.

Bei einer weiteren möglichen Ausführungsform des erfindungsgemäßen Verfahrens zum Zertifizieren einer sicherheitskritischen Funktionskette gibt das Schnittstellenzertifikat einer Komponentenschnittstelle ein minimales Schnittstellensicherheitslevel und/oder ein maximales Schnittstellensicherheitslevel der jeweiligen Komponentenschnittstelle an. Bei einer weiteren möglichen Ausführungsform des erfindungsgemäßen Verfahrens zum Zertifizieren einer sicherheitskritischen Funktionskette verbindet eine Kommunikationsverbindung eine Ausgabe-Komponentenschnittstelle einer ersten Komponente mit einer Eingabe-Komponentenschnittstelle einer zweiten Komponente drahtlos oder drahtgebunden.

Bei einer weiteren möglichen Ausführungsform des erfindungsgemäßen Verfahrens zum Zertifizieren einer sicherheitskritischen Funktionskette wird im Zuge der Schnittstellenzertifikatsprüfung jeweils geprüft, ob das von der Ausgabe-Komponentenschnittstelle der ersten Komponente angebotene Schnittstellensicherheitslevel, welches in dem Schnittstellensicherheitszertifikat der Ausgabe-Komponentenschnittstelle der ersten Komponente angegeben ist, für das von der Eingabe-Komponentenschnittstelle der zweiten Komponente geforderte Schnittstellensicherheitslevel, welches in dem Schnittstellensicherheitszertifikat der Eingabe-Komponentenschnittstelle der zweiten Komponente angegeben ist, genügend ist.

Bei einer weiteren möglichen Ausführungsform des erfindungsgemäßen Verfahrens wird im Zuge der Komponentensicherheitszertifikatsprüfung einer Komponente durch den Sicherheitszertifikatsmanager geprüft, ob ein Komponentensicherheitslevel der Komponente, welches in dem Komponentensicherheitszertifikat der betreffenden Komponente angegeben ist, für ein gemäß der vorgegebenen Sicherheitsanforderungen gefordertes Komponentensicherheitslevel der Komponente genügend ist.

Bei einer weiteren möglichen Ausführungsform des erfindungsgemäßen Verfahrens zum Zertifizieren einer sicherheitskritischen Funktionskette werden das Komponentenzertifikat einer Komponente und die Schnittstellensicherheitszertifikate der Komponentenschnittstellen der betreffenden Komponente in einem manipulationssicheren Datenspeicher abgespeichert und zu ihrer Prüfung an den Sicherheitszertifikatsmanager übertragen.

Bei einer weiteren möglichen Ausführungsform des erfindungsgemäßen Verfahrens zum Zertifizieren einer sicherheitskritischen Funktionskette sind die Komponentensicherheitslevel, die in den Komponentensicherheitszertifikaten der Komponenten angegeben sind, und/oder die Schnittstellensicherheitslevel, die in den Schnittstellensicherheitszertifikaten der Komponentenschnittstellen der Komponenten angegeben sind, fest vorkonfiguriert.

Bei einer alternativen Ausführungsform des erfindungsgemäßen Verfahrens zum Zertifizieren einer sicherheitskritischen Funktionskette sind die Komponentensicherheitslevel, die in den Komponentensicherheitszertifikaten der Komponenten angegeben sind, und/oder die Schnittstellensicherheitslevel, die in den Schnittstellensicherheitszertifikaten der Komponentenschnittstellen der betreffenden Komponenten angegeben sind, abhängig von Umgebungsbedingungen und/oder abhängig von Betriebszuständen der Komponenten der sicherheitskritischen Funktionskette veränderbar.

Bei einer weiteren möglichen Ausführungsform des erfindungsgemäßen Verfahrens zum Zertifizieren einer sicherheitskritischen Funktionskette überträgt der Sicherheitszertifikatsmanager eine Anforderungsnachricht zur Übertragung des Komponentensicherheitszertifikates einer Komponente sowie zur Übertragung eines Schnittstellensicherheitszertifikates pro Komponentenschnittstellen der betreffenden Komponente an die jeweilige Komponente.

Bei einer weiteren möglichen Ausführungsform des erfindungsgemäßen Verfahrens zum Zertifizieren einer sicherheitskritischen Funktionskette werden die Komponentenschnittstellen einer freigegebenen Komponente durch die freigegebene Komponente selbst oder durch den Sicherheitszertifikatsmanager logisch und / oder physikalisch aktiviert. Bei einer weiteren möglichen Ausführungsform des erfindungsgemäßen Verfahrens erfolgt das Zertifizieren der sicherheitskritischen Funktionskette automatisch in Reaktion auf ein erkanntes Auslöseereignis.

Bei einer weiteren möglichen Ausführungsform des erfindungsgemäßen Verfahrens zum Zertifizieren einer sicherheitskritischen Funktionskette umfasst das Auslöseereignis eine Inbetriebnahme mindestens einer Komponente der sicherheitskritischen Funktionskette. Bei einer weiteren möglichen Ausführungsform des erfindungsgemäßen Verfahrens umfasst das Auslöseereignis einen Betriebszustandswechsel mindestens einer Komponente der sicherheitskritischen Funktionskette. Bei einer weiteren möglichen Ausführungsform des erfindungsgemäßen Verfahrens umfasst das Auslöseereignis einen Austausch mindestens einer Komponente der sicherheitskritischen Funktionskette. Bei einer weiteren möglichen Ausführungsform des erfindungsgemäßen Verfahrens umfasst das Auslöseereignis ein Update einer Softwarekomponente der sicherheitskritischen Funktionskette.

Bei einer weiteren möglichen Ausführungsform des erfindungsgemäßen Verfahrens zum Zertifizieren einer sicherheitskritischen Funktionskette weist ein Komponentensicherheitszertifikat einer Komponente innerhalb der sicherheitskritischen Funktionskette auf:
eine Versionsnummer des Komponentensicherheitszertifikates,
ein Ausgabedatum des Komponentensicherheitszertifikates,
einen Aussteller des Komponentensicherheitszertifikates,
eine Art bzw. einen Typ der betreffenden sicherheitsrelevanten Komponente,
ein Komponentensicherheitslevel der Komponente,
eine Hersteller-Identifizierung des Herstellers der Komponente,
eine Komponentenidentifizierung der Komponente,
bereitgestellte Schnittstellensicherheitszertifikate für Ausgabe-Komponentenschnittstellen der Komponente mit einem darin jeweils angebotenen Schnittstellensicherheitslevel der Ausgabe-Komponentenschnittstelle,
benötigte Schnittstellensicherheitszertifikate für Eingabe-Komponentenschnittstellen der Komponente mit einem darin jeweils geforderten Schnittstellensicherheitslevel der Eingabe-Komponentenschnittstelle und Konfigurationsparameter der betreffenden Komponente.

Die Erfindung schafft weiterhin gemäß dem ersten Aspekt einen Sicherheitszertifikatsmanager für eine sicherheitskritische Funktionskette, die mehrere miteinander über Kommunikationsverbindungen verkettete Komponenten aufweist, wobei der Sicherheitszertifikatsmanager nach erfolgreicher Prüfung von Komponentensicherheitszertifikaten der Komponenten und von Schnittstellensicherheitszertifikaten von Komponentenschnittstellen der Komponenten die Komponenten der sicherheitskritischen Funktionskette automatisch freigibt. Dabei werden im Zuge der Schnittstellenzertifikatsprüfung die Schnittstellensicherheitszertifikate der beiden über eine Kommunikationsverbindung verbundenen Komponentenschnittstellen von zwei innerhalb der sicherheitskritischen Funktionskette benachbarter Komponenten dahingehend geprüft, ob die darin jeweils angegebenen Schnittstellensicherheitslevel zueinander kompatibel sind.

Die Erfindung schafft ferner gemäß dem ersten Aspekt eine Anlage mit einer sicherheitskritischen Funktionskette, die mehrere miteinander über Kommunikationsverbindungen verkettete Anlagenkomponenten aufweist, und mit einem Sicherheitszertifikatsmanager für die sicherheitskritische Funktionskette, die mehrere miteinander über Kommunikationsverbindungen verkettete Anlagenkomponenten aufweist, wobei der Sicherheitszertifikatsmanager der Anlage nach erfolgreicher Prüfung von Komponentensicherheitszertifikaten der Anlagenkomponenten und/oder von Schnittstellensicherheitszertifikaten von Komponentenschnittstellen der Anlagenkomponenten die Anlagenkomponenten der sicherheitskritischen Funktionskette automatisch freigibt.

Die Erfindung schafft ferner gemäß einem zweiten Aspekt ein Verfahren zum Bereitstellen einer gesicherten Kommunikationsverbindung zwischen Komponenten einer sicherheitskritischen Funktionskette mit den folgenden Schritten: Übertragen eines identischen Tokens durch einen Sicherheitszertifikatsmanager an zwei benachbarte Komponenten der sicherheitskritischen Funktionskette, wobei die beiden benachbarten Komponenten jeweils eine Komponentenschnittstelle für eine Kommunikationsverbindung mit der jeweils anderen benachbarten Komponente aufweisen,
Aktivieren der beiden für die Kommunikationsverbindung vorgesehenen Komponentenschnittstellen der beiden benachbarten Komponenten zum Aufbau der Kommunikationsverbindung zwischen den beiden benachbarten Komponenten, gegenseitiges Austauschen der jeweils von dem Sicherheitszertifikatsmanager durch die beiden benachbarten Komponenten erhaltenen Token über die aufgebaute Kommunikationsverbindung; und
Aufrechterhalten der aufgebauten Kommunikationsverbindung zwischen den beiden benachbarten Komponenten der sicherheitskritischen Funktionskette, falls die über die aufgebaute Kommunikationsverbindung zwischen den beiden benachbarten Komponenten ausgetauschten Token identisch mit den von dem Sicherheitszertifikatsmanager erhaltenen Token sind.

Bei einer möglichen Ausführungsform des erfindungsgemäßen Verfahrens zum Bereitstellen einer gesicherten Kommunikationsverbindung zwischen Komponenten einer sicherheitskritischen Funktionskette gemäß dem zweiten Aspekt der Erfindung weist das von dem Sicherheitszertifikatsmanager an die beiden benachbarten Komponenten der sicherheitskritischen Funktionskette übertragene Token einen Ablaufzeitpunkt auf.

Bei einer möglichen Ausführungsform des erfindungsgemäßen Verfahrens zum Bereitstellen einer gesicherten Kommunikationsverbindung zwischen Komponenten einer sicherheitskritischen Funktionskette wird die Kommunikationsverbindung zwischen den beiden benachbarten Komponenten der sicherheitskritischen Funktionskette nach Erreichen des Ablaufzeitpunktes des Tokens entsprechend einem Sicherheitslevel automatisch abgebaut bzw. deaktiviert.

Bei einer weiteren möglichen Ausführungsform des Verfahrens zum Bereitstellen einer gesicherten Kommunikationsverbindung zwischen Komponenten einer sicherheitskritischen Funktionskette gemäß dem zweiten Aspekt der Erfindung werden über die zwischen den beiden Komponenten aufgebaute Kommunikationsverbindung Daten entsprechend einem Sicherheitslevel verschlüsselt übertragen.

Bei einer weiteren möglichen Ausführungsform des Verfahrens zum Bereitstellen einer gesicherten Kommunikationsverbindung zwischen Komponenten einer sicherheitskritischen Funktionskette gemäß dem zweiten Aspekt der Erfindung weist das Sicherheitslevel ein Komponentensicherheitslevel einer Komponente auf, das in einem Komponentensicherheitszertifikat der Komponente angegeben ist, und/oder ein Schnittstellensicherheitslevel einer Komponentenschnittstelle einer Komponente, das in einem Schnittstellensicherheitszertifikat der Komponentenschnittstelle angegeben ist.

Bei einer weiteren möglichen Ausführungsform des Verfahrens zum Bereitstellen einer gesicherten Kommunikationsverbindung zwischen Komponenten einer sicherheitskritischen Funktionskette gemäß dem zweiten Aspekt der Erfindung versendet der Sicherheitszertifikatsmanager nach Freigabe aller Komponenten der sicherheitskritischen Funktionskette eine TAN-Liste an die Komponenten der sicherheitskritischen Funktionskette, die durch die Komponenten zur Verschlüsselung und Entschlüsselung der über die Kommunikationsverbindung übertragenen Daten verwendet wird.

Bei einer möglichen Ausführungsform des Verfahrens zum Bereitstellen einer gesicherten Kommunikationsverbindung zwischen Komponenten einer sicherheitskritischen Funktionskette gemäß dem zweiten Aspekt der Erfindung weist die versendete TAN-Liste eine Listennummer und eine vorgegebene Anzahl von einmalig verwendbaren TAN-Nummern zur Verschlüsselung und/oder Entschlüsselung der übertragenen Daten auf.

Bei einer weiteren möglichen Ausführungsform des Verfahrens zum Bereitstellen einer gesicherten Kommunikationsverbindung zwischen Komponenten einer sicherheitskritischen Funktionskette gemäß dem zweiten Aspekt der Erfindung prüft der Sicherheitszertifikatsmanager zur Freigabe der Komponenten der sicherheitskritischen Funktionskette Komponentensicherheitszertifikate der Komponenten und/oder Schnittstellensicherheitszertifikate von Komponentenschnittstellen der miteinander verketteten Komponenten der sicherheitskritischen Funktionskette anhand von vorgegebenen Sicherheitsanforderungen.

Bei einer weiteren möglichen Ausführungsform des Verfahrens zum Bereitstellen einer gesicherten Kommunikationsverbindung zwischen Komponenten einer sicherheitskritischen Funktionskette gemäß dem zweiten Aspekt der Erfindung werden die beiden für die Kommunikationsverbindung vorgesehenen Komponentenschnittstellen nach Freigabe der beiden benachbarten Komponenten durch den Sicherheitszertifikatsmanager durch die freigegebenen Komponenten selbst oder durch den Sicherheitszertifikatsmanager logisch oder physikalisch aktiviert.

Bei einer weiteren möglichen Ausführungsform des Verfahrens zum Bereitstellen einer gesicherten Kommunikationsverbindung zwischen Komponenten einer sicherheitskritischen Funktionskette gemäß dem zweiten Aspekt der Erfindung verbindet die Kommunikationsverbindung eine Ausgabe-Komponentenschnittstelle einer ersten Komponente mit einer Eingabe-Komponentenschnittstelle einer zweiten benachbarten Komponente drahtlos.

Bei einer weiteren möglichen Ausführungsform des Verfahrens zum Bereitstellen einer gesicherten Kommunikationsverbindung zwischen Komponenten einer sicherheitskritischen Funktionskette gemäß dem zweiten Aspekt der Erfindung verbindet die Kommunikationsverbindung eine Ausgabe-Komponentenschnittstelle einer ersten Komponente mit einer Eingabe-Komponentenschnittstelle einer zweiten benachbarten Komponente drahtgebunden.

Bei einer weiteren möglichen Ausführungsform des Verfahrens zum Bereitstellen einer gesicherten Kommunikationsverbindung zwischen Komponenten einer sicherheitskritischen Funktionskette gemäß dem zweiten Aspekt der Erfindung weisen die Komponentenschnittstellen analoge und/oder digitale Komponentenschnittstellen auf.

Bei einer weiteren möglichen Ausführungsform des Verfahrens zum Bereitstellen einer gesicherten Kommunikationsverbindung zwischen Komponenten einer sicherheitskritischen Funktionskette gemäß dem zweiten Aspekt der Erfindung umfassen die Komponenten der sicherheitskritischen Funktionskette Hardwarekomponenten und/oder Softwarekomponenten.

Die Erfindung schafft gemäß dem zweiten Aspekt ferner eine Anlage mit einer sicherheitskritischen Funktionskette, die mehrere über Kommunikationsverbindungen verkettete Komponenten und einen Sicherheitszertifikatsmanager aufweist, wobei der Sicherheitszertifikatsmanager der Anlage zum Bereitstellen einer gesicherten Kommunikationsverbindung zwischen zwei benachbarten Anlagenkomponenten der sicherheitskritischen Funktionskette ein identisches Token an die beiden benachbarten Anlagenkomponenten der sicherheitskritischen Funktionskette überträgt, wobei die beiden benachbarten Anlagenkomponenten jeweils eine Komponentenschnittstelle für eine Kommunikationsverbindung mit der jeweils anderen benachbarten Anlagenkomponente aufweisen, wobei die Komponentenschnittstellen der beiden benachbarten Anlagenkomponenten zum Aufbau der Kommunikationsverbindung zwischen den beiden benachbarten Anlagenkomponenten aktiviert werden und ein gegenseitiger Austausch eines von dem Sicherheitszertifikatsmanager der Anlage erhaltenen Tokens über die aufgebaute Kommunikationsverbindung zwischen den beiden benachbarten Anlagenkomponenten erfolgt,
wobei die aufgebaute Kommunikationsverbindung zwischen den beiden benachbarten Anlagenkomponenten der sicherheitskritischen Funktionskette aufrechterhalten wird, sofern die für die Kommunikationsverbindung zwischen den beiden benachbarten Anlagenkomponenten ausgetauschten Token identisch mit den von dem Sicherheitszertifikatsmanager der Anlage durch die beiden benachbarten Anlagenkomponenten erhaltenen Token sind.

Bei einer möglichen Ausführungsform weist das von dem Sicherheitszertifikatsmanager der Anlage an die beiden benachbarten Anlagenkomponenten der sicherheitskritischen Funktionskette übertragene Token einen Ablaufzeitpunkt auf, wobei die Kommunikationsverbindung zwischen den beiden benachbarten Anlagenkomponenten der sicherheitskritischen Funktionskette nach Erreichen des Ablaufzeitpunktes des Tokens entsprechend einem vorgegebenen Sicherheitslevel automatisch abgebaut wird.

Bei einer möglichen Ausführungsform der Anlage gemäß dem zweiten Aspekt der Erfindung werden über die zwischen den beiden benachbarten Anlagenkomponenten aufgebaute Kommunikationsverbindung Daten entsprechend einem Sicherheitslevel verschlüsselt übertragen.

Bei einer möglichen Ausführungsform der Anlage gemäß dem zweiten Aspekt der Erfindung ist das Sicherheitslevel ein Komponentensicherheitslevel einer Komponente, das in einem Komponentensicherheitszertifikat der Komponente angegeben ist und/oder ein Schnittstellensicherheitslevel einer Komponentenschnittstelle einer Komponente ist, das in einem Schnittstellensicherheitszertifikat der Komponentenschnittstelle angegeben ist.

Die Erfindung schafft gemäß einem weiteren dritten Aspekt eine Komponente für eine sicherheitskritische Funktionskette, die mehrere miteinander verkettete Komponenten aufweist, wobei die Komponente ein zugehöriges Komponentensicherheitszertifikat hat, das in einem zugehörigen manipulationssicheren Speicherbereich eines Datenspeichers gespeichert ist und zur Freigabe der Komponente innerhalb der sicherheitskritischen Funktionskette durch einen Sicherheitszertifikatsmanager verifizierbar ist.

Bei einer möglichen Ausführungsform ist das gespeicherte Komponentensicherheitszertifikat durch den Sicherheitszertifikatsmanager auslesbar und anhand vorgegebener Sicherheitsanforderungen hinsichtlich seiner Gültigkeit überprüfbar.

Bei einer möglichen Ausführungsform der Komponente ist der Speicherbereich zum Speichern des Komponentensicherheitszertifikates der Komponente in einem manipulationssicheren Datenspeicher vorgesehen, der in der Komponente integriert ist oder in einem externen manipulationssicheren Datenspeicher vorgesehen, der durch eine Speicheradresse referenziert wird.

Bei einer weiteren möglichen Ausführungsform der Komponente gemäß dem dritten Aspekt der Erfindung weist der in der Komponente integrierte Datenspeicher zum Speichern des Komponentensicherheitszertifikates der Komponente ein Trusted Platform Modul, TPM, auf.

Bei einer weiteren möglichen Ausführungsform der Komponente gemäß dem dritten Aspekt der Erfindung weist das Komponentensicherheitszertifikat der Komponente einige der folgenden Datenelemente auf:
eine Versionsnummer des Komponentensicherheitszertifikates,
ein Ausgabedatum des Komponentensicherheitszertifikates,
einen Aussteller des Komponentensicherheitszertifikates,
eine Art bzw. Typ der betreffenden Komponente,
ein Komponentensicherheitslevel der Komponente,
eine Hersteller-Identifizierung zur Identifizierung des Herstellers der Komponente,
eine Komponentenidentifizierung der Komponente, Schnittstellensicherheitszertifikate für Ausgabe-Komponentenschnittstellen der Komponente mit einem darin jeweils angebotenen Schnittstellensicherheitslevel der jeweiligen Ausgabe-Komponentenschnittstelle, Schnittstellensicherheitszertifikate für Eingabe-Komponentenschnittstellen der Komponente mit einem darin jeweils geforderten Schnittstellensicherheitslevel der jeweiligen Eingabe-Komponentenschnittstelle und Konfigurationsparameter der betreffenden Komponente.

Bei einer weiteren möglichen Ausführungsform der Komponente gemäß dem dritten Aspekt der Erfindung ist die Komponente eine Hardwarekomponente.

Bei einer weiteren möglichen Ausführungsform der Komponente gemäß dem dritten Aspekt der Erfindung ist die Komponente eine Softwarekomponente.

Bei einer weiteren möglichen Ausführungsform der Komponente gemäß dem dritten Aspekt der Erfindung weist die Komponente Komponentenschnittstellen zur Verkettung mit benachbarten Komponenten der sicherheitskritischen Funktionskette auf.

Bei einer weiteren Ausführungsform der erfindungsgemäßen Komponente gemäß dem dritten Aspekt der Erfindung ist für jede Komponentenschnittstelle der Komponente ein zugehöriges Schnittstellensicherheitszertifikat vorgesehen.

Die Erfindung schafft gemäß dem dritten Aspekt ferner eine Anlage mit mindestens einer sicherheitskritischen Funktionskette, die aus mehreren miteinander verketteten Anlagenkomponenten besteht.

Die Erfindung schafft gemäß dem dritten Aspekt ferner einen Sicherheitszertifikatsmanager für eine sicherheitskritische Funktionskette, die mehrere miteinander über Kommunikationsverbindungen verkettete Komponenten aufweist, wobei der Sicherheitszertifikatsmanager nach erfolgreicher Prüfung von Komponentensicherheitszertifikaten und/oder von Komponentenschnittstellensicherheitszertifikaten die sicherheitskritischen Funktionskette automatisch freigibt.

Im Weiteren werden mögliche Ausführungsformen der verschiedenen Aspekte gemäß der Erfindung unter Bezugnahme auf die beigefügten Figuren detailliert beschrieben.

Es zeigen:
- Fig. 1: ein schematisches Blockschaltbild zur Erläuterung der Funktionsweise eines erfindungsgemäßen Verfahrens zum Zertifizieren einer sicherheitskritischen Funktionskette gemäß dem ersten Aspekt der Erfindung;
- Fig. 2: ein Ablaufdiagramm zur Darstellung einer möglichen beispielhaften Ausführungsform des erfindungsgemäßen Verfahrens zum Zertifizieren einer sicherheitskritischen Funktionskette gemäß dem ersten Aspekt der Erfindung;
- Fig. 3: ein Signalablaufdiagramm zur Darstellung eines Ausführungsbeispiels eines erfindungsgemäßen Verfahrens zum Zertifizieren einer sicherheitskritischen Funktionskette gemäß dem ersten Aspekt der Erfindung;
- Figuren 4, 5: schematische Darstellungen möglicher sicherheitskritischer Funktionsketten;
- Fig. 6: eine schematische Darstellung eines Ausführungsbeispiels einer Anlage, bei dem das erfindungsgemäße Verfahren zum Zertifizieren einer sicherheitskritischen Funktionskette eingesetzt werden kann;
- Fig. 7: eine schematische Darstellung zur Erläuterung eines möglichen Ablaufs einer Zertifikatsprüfung bei der in Fig. 6 dargestellten Anlage;
- Fig. 8: eine schematische Darstellung eines möglichen Ablaufs einer Zertifikatsprüfung bei Erneuerung einer Komponente der in Fig. 6 dargestellten Anlage;
- Fig. 9: eine schematische Darstellung einer negativ verlaufenden Zertifikatsprüfung einer erneuerten Komponente innerhalb der in Fig. 6 dargestellten Anlage;
- Fig. 10: eine schematische Darstellung eines Verfahrens zum Bereitstellen einer Kommunikationsverbindung zwischen Komponenten einer sicherheitskritischen Funktionskette gemäß einem zweiten Aspekt der Erfindung;
- Fig. 11: ein Signaldiagramm zur Darstellung eines Ausführungsbeispiels des in Fig. 10 dargestellten Verfahrens zum Bereitstellen einer gesicherten Kommunikationsverbindung zwischen Komponenten einer sicherheitskritischen Funktionskette;
- Fig. 12: eine schematische Darstellung der Aktivierung einer Schnittstelle zwischen zwei Komponenten einer sicherheitskritischen Funktionskette;
- Fig. 13: eine weitere schematische Darstellung zur Erläuterung der Aktivierung einer Randkomponente einer sicherheitskritischen Funktionskette;
- Fig. 14: eine schematische Darstellung einer Komponente für eine sicherheitskritische Funktionskette gemäß einem dritten Aspekt der Erfindung;
- Fig. 15: eine weitere schematische Darstellung eines Ausführungsbeispiels einer Komponente für eine sicherheitskritische Funktionskette gemäß dem dritten Aspekt der Erfindung;
- Fig. 16: ein Datenstrukturdiagramm eines exemplarischen Ausführungsbeispiels eines Zertifikates, das für die in den Figuren 14, 15 dargestellten Komponenten verwendet werden kann.

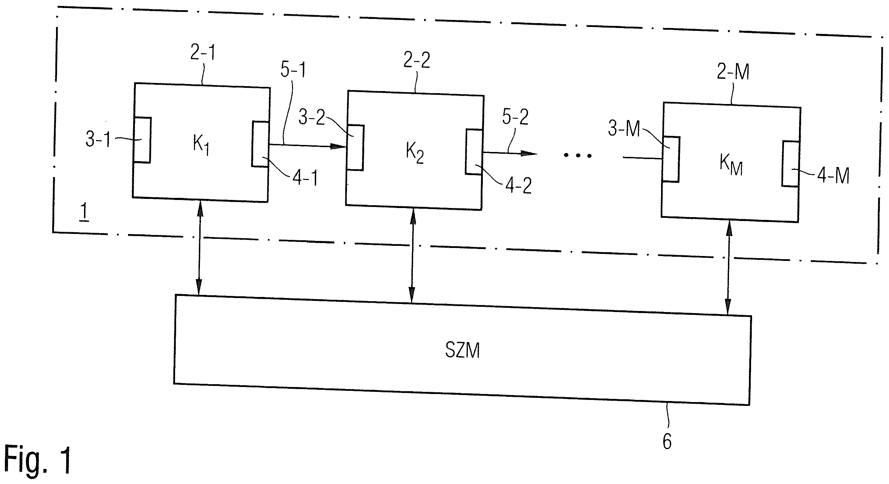

Fig. 1 zeigt eine Funktionskette 1, die mehrere Komponenten 2-1, 2-2 ... 2-M umfasst. Die Komponenten sind miteinander über Kommunikationsverbindungen verbunden. Bei den Komponenten 2-i kann es sich um Hardwarekomponenten und/oder Softwarekomponenten handeln. Die Funktionskette 1 umfasst bei dem in Fig. 1 dargestellten Ausführungsbeispiel mehrere seriell verkettete Komponenten zur Bereitstellung einer Sicherheitsfunktion. Die Funktionskette 1 stellt eine Funktion bereit, die im Fehlerfall die Gesundheit einer Person gefährden kann. Zur Verkettung der Komponenten weisen die verschiedenen Komponenten jeweils Schnittstellen auf, wie in Fig. 1 dargestellt. Dabei kann es sich um Hardwareschnittstellen oder Softwareschnittstellen handeln. In dem dargestellten Ausführungsbeispiel weist jede der Komponenten 2-i der sicherheitskritischen Funktionskette 1 eine Ausgabe-Komponentenschnittstelle 4-i der Komponente auf, die jeweils mit der nächsten Eingabe-Komponentenschnittstelle 3-(i+1) der benachbarten Komponente 2-(i+1) über eine Kommunikationsverbindung 5-i drahtlos und/oder drahtgebunden verbunden ist. Die Kommunikationsverbindungen 5-i sind vorzugsweise unidirektional, d.h. bei aufgebauter Kommunikationsverbindung werden von einer Ausgabe-Komponentenschnittstelle Daten oder Nachrichten zu der Eingabe-Komponentenschnittstelle der nächsten benachbarten Komponente in einer Richtung übertragen, sodass innerhalb der sicherheitskritischen Funktionskette eine Kausalitätsbeziehung besteht.

Die Komponenten 2-i der sicherheitskritischen Funktionskette 1 können mit einem Sicherheitszertifikatsmanager 6 bidirektional kommunizieren, wie in Fig. 1 dargestellt. Die Kommunikation mit dem Sicherheitszertifikatsmanager 6 kann bei einer möglichen Ausführungsform über separate Kommunikationsverbindungen erfolgen. Alternativ kann die Kommunikation mit dem Sicherheitszertifikatsmanager 6 über die Kommunikationsverbindungen 5-i erfolgen. Dieser kann beispielsweise Anforderungsnachrichten bzw. Requests für Sicherheitszertifikate über die erste Eingabe-Schnittstelle 3-1 der sicherheitskritischen Funktionskette 1 einspeisen und Sicherheitszertifikate von der Ausgabe-Komponentenschnittstelle 4-M der letzten innerhalb der sicherheitskritischen Funktionskette 1 vorhandenen Komponente 2-M erhalten.

Der Sicherheitszertifikatsmanager 6 bildet bei einer möglichen Ausführungsform eine separate Komponente außerhalb der sicherheitskritischen Funktionskette 1, wie in Fig. 1 dargestellt. Bei einer alternativen Ausführungsform ist der Sicherheitszertifikatsmanager 6 in einer der Komponenten 2-i der sicherheitskritischen Funktionskette 1 integriert. Für jede der Komponente 2-i der sicherheitskritischen Funktionskette 1 ist mindestens ein Komponentensicherheitszertifikat KSZ vorgesehen. Ferner besitzt jede Komponentenschnittstelle, d.h. jede Eingabe-Komponentenschnittstelle 3-i und jede Ausgabe-Komponentenschnittstelle 4-i, ein zugehöriges Schnittstellensicherheitszertifikat SSZ. Die Komponentensicherheitszertifikate KSZ und die Schnittstellensicherheitszertifikate SSZ sind digitale Zertifikate, die in einem Speicherbereich abgespeichert sein können. Der Sicherheitszertifikatsmanager 6 hat Zugriff auf die Komponentensicherheitszertifikate KSZ der innerhalb der Funktionskette 1 miteinander verketteten Komponenten 2-i und auf die Schnittstellensicherheitszertifikate SSZ der miteinander verketteten Schnittstellen. Dies erlaubt eine zentrale Prüfung der digitalen Zertifikate durch den Sicherheitszertifikatsmanager 6 der sicherheitskritischen Funktionskette 1. Der Sicherheitszertifikatsmanager 6 kann anhand vorgegebener Sicherheitsanforderungen für die sicherheitskritische Funktionskette 1 eine zentrale automatische Zertifizierung bzw. Rezertifizierung durchführen. Wird die Komponentensicherheitszertifikatsprüfung und die Schnittstellensicherheitszertifikatsprüfung seitens des Sicherheitszertifikatsmanagers 6 erfolgreich durchgeführt, werden automatisch die Komponenten 2-i der sicherheitskritischen Funktionskette 1 durch den Sicherheitszertifikatsmanager 6 freigegeben. Falls die Gesamtheit aller Zertifikate, d.h. die Komponentensicherheitszertifikate KSZ und alle Schnittstellensicherheitszertifikate SSZ den Sicherheitsanforderungen für die sicherheitskritische Funktionskette 1 genügt, gibt der Sicherheitszertifikatsmanager 6 die verschiedenen Komponenten 2-i der sicherheitskritischen Funktionskette 1 frei. Die Komponenten der sicherheitskritischen Funktionskette 1 stellen bei einer möglichen Ausführungsform eine Sicherheitsfunktion bereit.

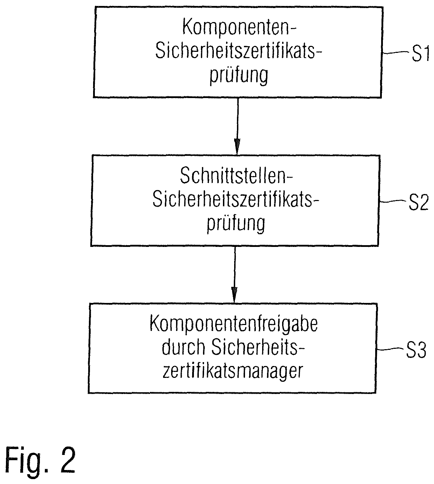

Fig. 2 zeigt ein Ablaufdiagramm zur Darstellung eines Ausführungsbeispiels des erfindungsgemäßen Verfahrens zum Zertifizieren einer sicherheitskritischen Funktionskette 1 gemäß einem ersten Aspekt der Erfindung. Das Verfahren dient zum Zertifizieren bzw. Rezertifizieren einer komplexen sicherheitskritischen Funktionskette 1, die mehrere miteinander über Kommunikationsverbindungen verkettete Komponenten zur Bereitstellung einer Sicherheitsfunktion aufweist. Im Schritt S1 erfolgt eine Komponentensicherheitszertifikatsprüfung durch einen Sicherheitszertifikatsmanager 6. Die Komponentensicherheitszertifikate KSZ der verketteten Komponenten 2-i werden durch den Sicherheitszertifikatsmanager 6 anhand vorgegebener Sicherheitsanforderungen geprüft. Die Sicherheitsanforderungen können in einem Datenspeicher des Sicherheitszertifikatsmanagers 6 gespeichert sein oder über eine Schnittstelle eingegeben werden. Die Sicherheitsanforderungen können anhand von Sicherheitsleveln definiert sein. Die Komponentensicherheitszertifikate KSZ geben ein Komponentensicherheitslevel KSL der jeweiligen Komponente 2-i innerhalb der sicherheitskritischen Funktionskette 1 an. Weiterhin geben die Schnittstellensicherheitszertifikate SSZ der verschiedenen Komponentenschnittstellen jeweils ein Schnittstellensicherheitslevel SSL der jeweiligen Komponentenschnittstelle an. Bei der Komponentensicherheitszertifikatsprüfung im Schritt S1 wird durch den Sicherheitszertifikatsmanager 6 geprüft, ob ein Komponentensicherheitslevel KSL, das in dem Komponentensicherheitszertifikat KSZ der betreffenden Komponente 2-i angegeben ist, für ein gemäß den vorgegebenen Sicherheitsanforderungen gefordertes Komponentensicherheitslevel KSL der betreffenden Komponente 2-i genügend bzw. ausreichend ist.

In einem weiteren Schritt S2 erfolgt seitens des Sicherheitszertifikatsmanagers 6 eine Schnittstellensicherheitszertifikatsprüfung. Bei der Schnittstellensicherheitszertifikatsprüfung werden Schnittstellensicherheitszertifikate SSZ der beiden über eine Kommunikationsverbindung 5 verbundenen Komponentenschnittstellen 4, 3 von zwei innerhalb der sicherheitskritischen Funktionskette 1 benachbarter Komponenten 2-i, 2-(i+1) dahingehend geprüft, ob die darin jeweils angegebenen Schnittstellensicherheitslevel SSL zueinander kompatibel bzw. passend sind. Bei einer möglichen Ausführungsform gibt ein Schnittstellensicherheitszertifikat SSZ einer Komponentenschnittstelle ein minimales Schnittstellensicherheitslevel SSL_{MIN} und/oder ein maximales Schnittstellensicherheitslevel SSL_{MAX} der jeweiligen Komponentenschnittstelle an. Bei einer Ausführungsform wird im Zuge der Schnittstellenzertifikatsprüfung im Schritt S2 geprüft, ob das von der Ausgabe-Komponentenschnittstelle 4 einer ersten Komponente 2-i gebotene bzw. zur Verfügung gestellte Schnittstellensicherheitslevel SSL-AUS, welches in dem Schnittstellensicherheitszertifikat SSZ der Ausgabe-Komponentenschnittstelle 4-i einer Komponente 2-i angegeben ist, für eine von einer Eingabe-Komponentenschnittstelle 3-(i+1) der nächsten Komponente 2-(i+1) geforderte Schnittstellensicherheitslevel SSL-EIN, welches in dem Schnittstellensicherheitszertifikat SSZ der Eingabe-Komponentenschnittstelle 3-(i+1) der nächsten Komponente 2-(i+1) angegeben ist, ausreichend ist. Ist beispielsweise das Schnittstellensicherheitslevel SSL der Ausgabe-Komponentenschnittstelle 4-i der ersten Komponente 2-i größer oder gleich dem von der Eingabe-Komponentenschnittstelle 3-(i+1) der zweiten Komponente 2-(i+1) geforderten Schnittstellensicherheitslevel SSL, so ist die Schnittstellensicherheitszertifikatsprüfung im Schritt S2 an dieser Stelle der Funktionskette 1 erfolgreich. Hat beispielsweise das von der Ausgabe-Komponentenschnittstelle 4-i der ersten Komponente 2-i angebotene Schnittstellensicherheitslevel, SSL, das in dem Schnittstellensicherheitszertifikat SSZ der Ausgabe-Komponentenschnittstelle 4-i einer Komponente 2-i angegeben ist, einen Wert 5, (SSL-AUS=5) und hat das von der Eingabe-Komponentenschnittstelle 3-(i+1) der nächsten Komponente 2-(i+1) geforderte Schnittstellensicherheitslevel SSL, das im Schnittstellensicherheitszertifikat SSZ der Eingabe-Komponentenschnittstelle 3-(i+1) der zweiten benachbarten Komponente 2-(i+1) angegeben ist, einen Wert 4 (SSL-EIN=4), so sind die beiden Schnittstellensicherheitslevel SSL der beiden Komponentenschnittstellen miteinander kompatibel, sodass die Schnittstellensicherheitszertifikatsprüfung an dieser Stelle erfolgreich durchgeführt werden kann. Die im Schritt S1 verwendeten Komponentensicherheitszertifikate KSZ und die Schnittstellensicherheitszertifikate SSZ der Komponentenschnittstellen, die im Schritt S2 verwendet werden, werden vorzugsweise in einem manipulationssicheren Datenspeicher abgespeichert und können zu ihrer Prüfung an den Sicherheitszertifikatsmanager 6 übertragen werden.

Im Schritt S3 erfolgt eine Komponentenfreigabe durch den Sicherheitszertifikatsmanager 6, falls die Komponentenzertifikatsprüfung im Schritt S1 und die Schnittstellensicherheitszertifikatsprüfung im Schritt S2 erfolgreich sind. Nach Freigabe der Komponenten 2-i innerhalb der sicherheitskritischen Funktionskette 1 können die verschiedenen Komponenten 2-i ihre Komponentenschnittstellen, d.h. die Eingabe-Komponentenschnittstellen 3-i und die Ausgabe-Komponentenschnittstellen 4-i aktivieren, sodass die sicherheitskritische Funktionskette 1 insgesamt aktiviert wird.

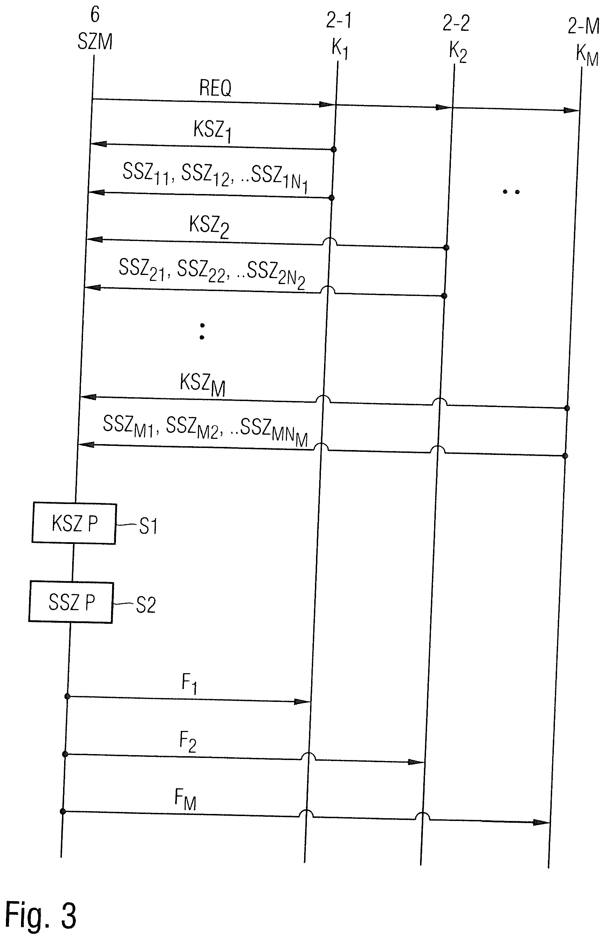

Fig. 3 zeigt ein Signalablaufdiagramm eines Ausführungsbeispiels des erfindungsgemäßen Verfahrens zum Zertifizieren einer sicherheitskritischen Funktionskette 1. Zunächst überträgt der Sicherheitszertifikatsmanager 6 einen Request bzw. eine Anforderung an Komponenten 2-i der sicherheitskritischen Funktionskette 1, wobei der Sicherheitszertifikatsmanager 6 von den Komponenten der sicherheitskritischen Funktionskette 1 deren digitale Zertifikate anfordert. Der Sicherheitszertifikatsmanager 6 kann die Zertifikate von den Komponenten 2-i parallel bzw. gleichzeitig, wie in Fig. 3 dargestellt, oder nacheinander anfordern. Der Sicherheitszertifikatsmanager 6 fordert bei dem dargestellten Beispiel zunächst die erste Komponente 2-1 auf, ihr Komponentensicherheitszertifikat KSZ1 und die verschiedenen Schnittstellensicherheitszertifikate SSZ für die verschiedenen Komponentenschnittstellen der Komponente 2-1 zu übertragen. Jede Komponente 2-i kann eine Anzahl N von Komponentenschnittstellen besitzen. Bei dem in Fig. 1 dargestellten Beispiel besitzt jede Komponente 2-i der sicherheitskritischen Funktionskette 1 zwei Komponentenschnittstellen, nämlich eine Eingabe-Komponentenschnittstelle 3-i und eine Ausgabe-Komponentenschnittstelle 4-i. Dementsprechend besitzt bei dem in Fig. 1 dargestellten Beispiel jede Komponente 2-i zwei Schnittstellensicherheitszertifikate SSZ. Allgemein besitzt jede Komponente 2-i eine vorgegebene Anzahl N von Komponentenschnittstellen und eine entsprechende Anzahl N von zugehörigen Schnittstellensicherheitszertifikaten SSZ. Die erste Komponente 2-1, die N1 Komponentenschnittstellen besitzt, sendet eine entsprechende Anzahl N1 von Schnittstellensicherheitszertifikaten SSZ an den anfragenden Sicherheitszertifikatsmanager 6. In entsprechender Weise überträgt die nächste Komponente 2-2 ihr Komponentensicherheitszertifikat KSZ2 sowie N2 Schnittstellenzertifikate SSZ für ihre N2 Komponentenschnittstellen an den Sicherheitszertifikatsmanager 6. Auf diese Weise erhält der Sicherheitszertifikatsmanager 6 nach und nach die Komponentensicherheitszertifikate KSZ sowie alle Schnittstellensicherheitszertifikate SSZ der verschiedenen Komponenten 2-i, wie in Fig. 3 dargestellt. Auf Basis der Komponentenschnittstellensicherheitszertifikate KSZ und der Schnittstellensicherheitszertifikate SSZ führt der Sicherheitszertifikatsmanager 6 eine Sicherheitszertifikatsprüfung durch. Dabei wird vorzugsweise geprüft, ob ein Komponentensicherheitslevel KSL der Komponente 2, die im Komponentensicherheitszertifikat KSZ der betreffenden Komponente angegeben ist, für das Sicherheitslevel der Komponente gemäß den vorgegebenen Sicherheitsanforderungen ausreichend ist. Im Zuge der Schnittstellenzertifikatsprüfung im Schritt S2 werden Schnittstellensicherheitszertifikate SSZ der beiden innerhalb der sicherheitskritischen Funktionskette 1 benachbarten Komponenten dahingehend geprüft, ob die Schnittstellensicherheitslevel SSL zueinander passen bzw. kompatibel sind. Ist sowohl die Komponentensicherheitszertifikatsprüfung im Schritt S1 als auch die Schnittstellensicherheitszertifikatsprüfung im Schritt S2 erfolgreich, werden seitens des Sicherheitszertifikatsmanagers 6 die Komponenten 2-i der sicherheitskritischen Funktionskette 1 freigegeben. Hierzu kann der Sicherheitszertifikatsmanager 6 Freigabenachrichten F1, F2 ... Fₘ an die verschiedenen Komponenten 2-i der sicherheitskritischen Funktionskette 1 übertragen, wie in Fig. 3 dargestellt. Falls die Gesamtheit aller Zertifikate die Sicherheitsanforderungen erfüllen, gibt der Sicherheitszertifikatsmanager 6 die einzelnen Komponenten 2-i der sicherheitskritischen Funktionskette 1 frei. Anschließend aktivieren die verschiedenen Komponenten 2-i der sicherheitskritischen Funktionskette 1 ihre Komponentenschnittstellen und stellen die gewünschte Sicherheitsfunktion bereit. Falls ein digitales Zertifikat einer Komponente 2-i nicht die geforderten Sicherheitsanforderungen erfüllt, kann der Sicherheitszertifikatsmanager 6 die jeweilige Komponente innerhalb der sicherheitskritischen Funktionskette 1 sperren.

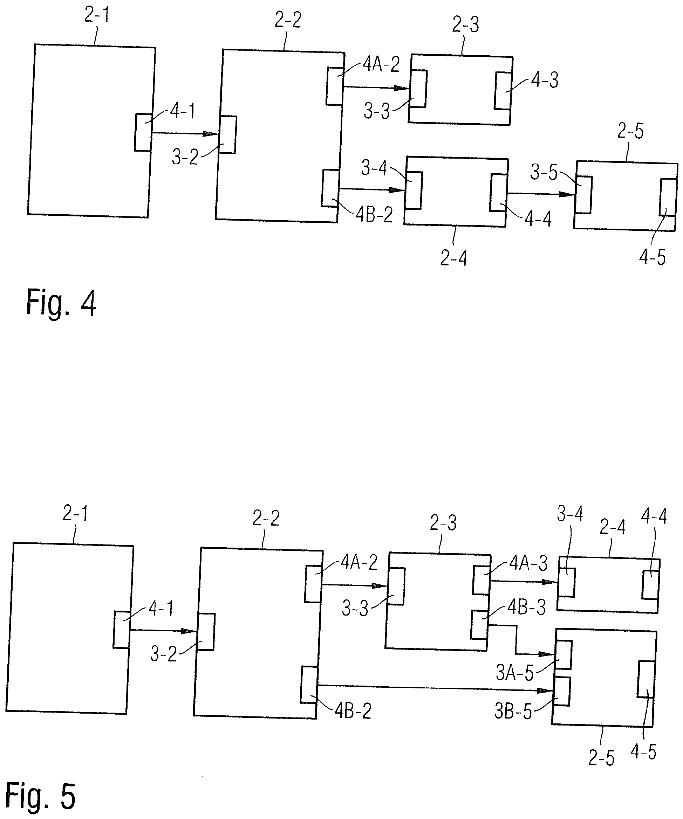

Figuren 4, 5 zeigen weitere Beispiele für Systeme bzw. Anlagen, welche sicherheitskritische Funktionsketten 1 beinhalten. Bei dem in Fig. 1 dargestellten Beispiel besitzt das System eine einzige lineare sicherheitskritische Funktionskette 1 mit seriell verketteten Hardware- oder Softwarekomponenten 2-i. Dabei haben alle Komponenten 2-i jeweils eine Eingabe-Komponentenschnittstelle 3-i und eine Ausgabe-Komponentenschnittstelle 4-i. Wie in Fig. 4 dargestellt, kann jede Komponente auch mehrere Komponentenschnittstellen aufweisen. Die zweite Komponente 2-2 besitzt beispielsweise zwei Ausgabe-Komponentenschnittstellen 4A-2, 4B-2. Hierdurch ergeben sich zwei sicherheitskritische Funktionsketten 1 innerhalb des Systems, nämlich eine erste sicherheitskritische Funktionskette 1, gebildet aus den verketteten Komponenten 2-1, 2-2, 2-3, und eine zweite sicherheitskritische Funktionskette 1, gebildet aus den verketteten Komponenten 2-1, 2-2, 2-4, 2-5.

Weiterhin können Komponenten auch mehrere Eingabe-Komponentenschnittstellen aufweisen, wie beispielsweise in Fig. 5 gezeigt. Beispielsweise hat die Komponente 2-5 zwei Eingabe-Komponentenschnittstellen 3A-5, 3B-5. Bei diesem System ergeben sich somit drei sicherheitskritische Funktionsketten 1, nämlich eine erste sicherheitskritische Funktionskette bestehend aus den Komponenten 2-1, 2-2, 2-3, 2-4, eine zweite sicherheitskritische Funktionskette bestehend aus den Komponenten 2-1, 2-2, 2-3, 2-5 und eine weitere sicherheitskritische Funktionskette bestehend aus den Komponenten 2-1, 2-2, 2-5, die durch den Sicherheitszertifikatsmanager 6 separat geprüft und zertifiziert werden. Eine Freigabe des Systems erfolgt, nachdem alle Funktionsketten 1 erfolgreich seitens des Sicherheitszertifikatsmanagers 6 im Hinblick auf die Sicherheitsanforderungen geprüft worden sind. Innerhalb des Systems kommunizieren zwei Komponentenschnittstellen von zwei benachbarten Komponenten miteinander. Die Kommunikationsverbindung kann dabei eine drahtlose Verbindung, z.B. WLAN, oder eine drahtgebundene Verbindung, beispielsweise ein serieller oder paralleler Datenbus, sein.

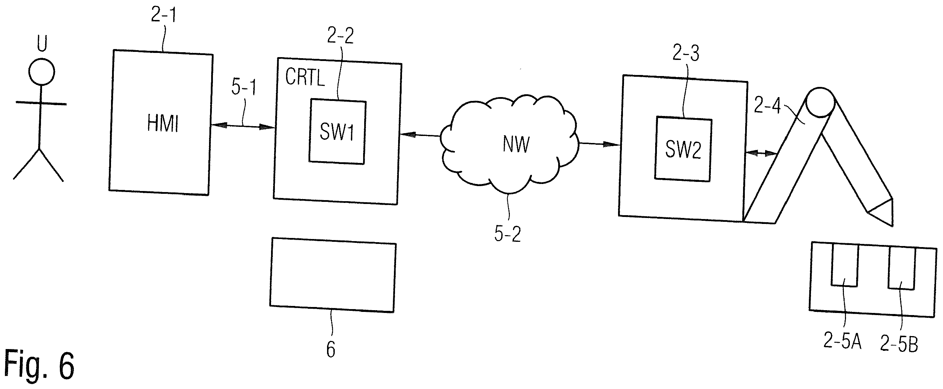

Fig. 6 zeigt ein Ausführungsbeispiel einer technischen Anlage mit einer sicherheitskritischen Funktionskette 1, die aus mehreren miteinander verketteten Hardware- und Softwarekomponenten 2 besteht. Ein Industrieroboterarm einer Fertigungsanlage stellt eine sicherheitskritische Funktion bereit, da eine Person in der Nähe des Industrieroboters gefährdet werden kann. Der Industrieroboterarm wird durch Hard- und Softwarekomponenten angesteuert, die in einer Funktionskette seriell miteinander verschaltet sind. Eine Nutzerschnittstelleneinheit 2-1 ist mit einer Steuerung der Anlage verbunden. Hierzu weist die Nutzerschnittstelleneinheit 2-1 eine Ausgabe-Komponentenschnittstellenstelle auf, die mit einer Eingabe-Komponentenschnittstelle der Anlagensteuerung verbunden ist. Die Anlagensteuerung enthält einen Mikroprozessor, der ein Steuerprogramm als Softwarekomponente 2-2 ausführt. Eine Kommunikationsverbindung zwischen der Nutzereingabeschnittstelle 2-1 und der Softwarekomponente 2-2 wird über Steuer- und Datenleitungen 5-1 gebildet. Die Anlagensteuerung der Anlage steuert über ein Datennetzwerk als Kommunikationsverbindung 5-2 eine weitere Softwarekomponente 2-3, die in einer lokalen Roboterarmsteuerung der Fertigungsanlage implementiert ist. Die Softwarekomponente 2-3 steuert ihrerseits den Roboterarm als Hardwarekomponente 2-4 an, wie in Fig. 6 dargestellt. Der Roboterarm besitzt beispielsweise an seiner Spitze eine Vorrichtung zum Herausnehmen von verschiedenen Werkzeugen bzw. Tools zur Durchführung von Fertigungsschritten innerhalb der Fertigungsanlage. Hierzu entnimmt der Roboterarm 2-4 Werkzeuge bzw. Tools 2-5A, 2-5B aus einer Werkzeughalteeinrichtung. Bei dem dargestellten Ausführungsbeispiel der Fertigungsanlage umfasst die sicherheitskritische Funktionskette 1 die Komponente 2-1, die beiden Softwarekomponenten 2-2, 2-3 sowie den Roboterarm als Hardwarekomponente 2-4. In dem dargestellten Beispiel kann die sicherheitskritische Funktionskette 1 um eine Hardwarekomponente während des Betriebes erweitert werden, wobei es sich bei der zusätzlichen Hardwarekomponente entweder um das Werkzeug 2-5A oder das Werkzeug 2-5B handelt.

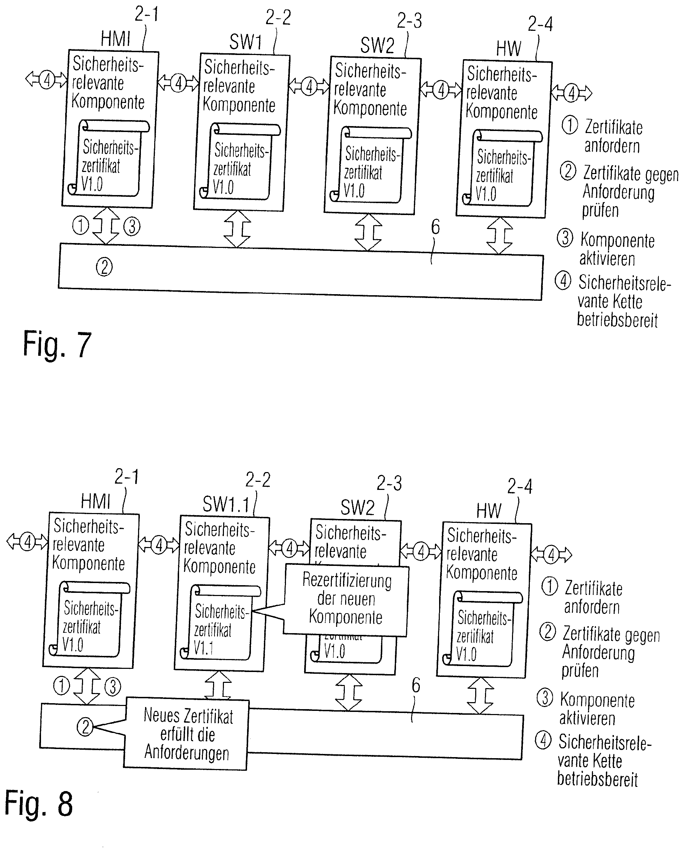

Fig. 7 zeigt schematisch die in Fig. 6 dargestellte Fertigungsanlage zur Erläuterung des erfindungsgemäßen Verfahrens. Dabei verfügt jede Komponente 2-i der sicherheitskritischen Funktionskette 1 über mindestens ein Sicherheitszertifikat mit der Versionsnummer V1.0. Die verschiedenen Komponenten 2-i stellen sicherheitsrelevante Komponenten innerhalb der sicherheitskritischen Funktionskette 1 dar, die seriell miteinander verschaltet bzw. verkettet sind. Der Sicherheitszertifikatsmanager 6 überprüft die verschiedenen Sicherheitszertifikate der verschiedenen sicherheitsrelevanten Komponenten. Der Sicherheitszertifikatsmanager 6 fordert von den einzelnen sicherheitsrelevanten Komponenten 2-i, beispielsweise von der Nutzerschnittstelleneinheit 2-1, die zugehörigen digitalen Sicherheitszertifikate an. Die Sicherheitszertifikate umfassen Komponentensicherheitszertifikate KSZ und Schnittstellensicherheitszertifikate SSZ. In einem weiteren Schritt werden die angeforderten und an den Sicherheitszertifikatsmanager 6 übertragenen digitalen Zertifikate durch den Sicherheitszertifikatsmanager 6 hinsichtlich der Erfüllung von vorgegebenen Sicherheitsanforderungen geprüft.

Nach erfolgreichem Abschluss der Komponentensicherheitszertifikatsprüfung und der Schnittstellensicherheitszertifikatsprüfung der jeweiligen Komponente wird die sicherheitsrelevante Komponente 2-1 freigegeben. Sobald alle Komponenten seitens des Sicherheitszertifikatsmanagers 6 geprüft worden sind, werden die verschiedenen Komponentenschnittstellen der sicherheitsrelevanten Komponenten 2-i aktiviert, woraufhin die sicherheitskritische Funktionskette 1 betriebsbereit ist. Der Zertifizierungsvorgang der sicherheitskritischen Funktionskette 1 kann beispielsweise bei Inbetriebnahme der in Fig. 6 dargestellten Fertigungsanlage erfolgen. Die Zertifizierung der sicherheitskritischen Funktionskette 1 erfolgt vorzugsweise automatisch in Reaktion auf ein erkanntes Auslöseereignis. Bei einer möglichen Ausführungsform ist das Auslöseereignis eine Inbetriebnahme mindestens einer Komponente 2-i innerhalb der sicherheitskritischen Funktionskette 1. Bei einer weiteren möglichen Ausführungsform ist das Auslöseereignis für den Zertifizierungsvorgang ein Betriebszustandswechsel mindestens einer Komponente 2-i innerhalb der sicherheitskritischen Funktionskette 1. Vorzugsweise wird das Auslöseereignis durch den Sicherheitszertifikatsmanager 6 automatisch erfasst. Der Sicherheitszertifikatsmanager 6 führt bei einer Inbetriebnahme oder bei einem Anschalten der Fertigungsanlage den Zertifizierungsvorgang durch. Ferner überwacht der Sicherheitszertifikatsmanager 6 vorzugsweise die verschiedenen sicherheitsrelevanten Komponenten innerhalb der sicherheitskritischen Funktionskette 1, um einen relevanten Betriebszustandswechsel automatisch zu erkennen und anschließend den Zertifizierungsprozess in Gang zu setzen. Ferner kann bei einer möglichen Ausführungsform sensorisch erfasst werden, dass eine Komponente 2 innerhalb der sicherheitskritischen Funktionskette 1 durch eine andere Komponente ersetzt bzw. ausgetauscht wird. Ferner kann der Sicherheitszertifikatsmanager 6 bei einer möglichen Ausführungsform die Durchführung eines Softwareupdatevorganges bei einer Softwarekomponente innerhalb der sicherheitskritischen Funktionskette 1 erkennen und dann den Zertifizierungsvorgang einleiten.

Fig. 8 zeigt schematisch einen Rezertifizierungsprozess gemäß dem erfindungsgemäßen Zertifizierungsverfahren nach einem Softwareupdate der Softwarekomponente 2-2 der Fertigungsanlage. Mithilfe des erfindungsgemäßen Zertifizierungsverfahrens erfolgt die Zertifikatsprüfung der sicherheitsrelevanten Softwarekomponente 2-2 automatisch. Im Falle eines Softwareupdates der Softwarekomponente wird die Softwarekomponente innerhalb der sicherheitskritischen Funktionskette 1 mithilfe des erfindungsgemäßen Verfahrens isoliert rezertifiziert. Sie erhält dabei ein neues digitales Zertifikat mit der Versionsnummer V1.1. Sobald die neue, insbesondere upgedatete, Softwarekomponente der Funktionskette 1 ein Zertifikat mit der Versionsnummer V1.1 von dem Sicherheitszertifikatsmanager 6 erhalten hat, wird dies entsprechend den Sicherheitsanforderungen der Anlage automatisch geprüft. Nach erfolgreicher Rezertifizierung werden die verschiedenen Komponenten 2-i der Anlage durch den Sicherheitszertifikatsmanager 6 freigegeben und anschließend die zugehörigen Komponentenschnittstellen automatisch aktiviert, damit die Funktionskette 1 innerhalb der Anlage betriebsbereit ist.

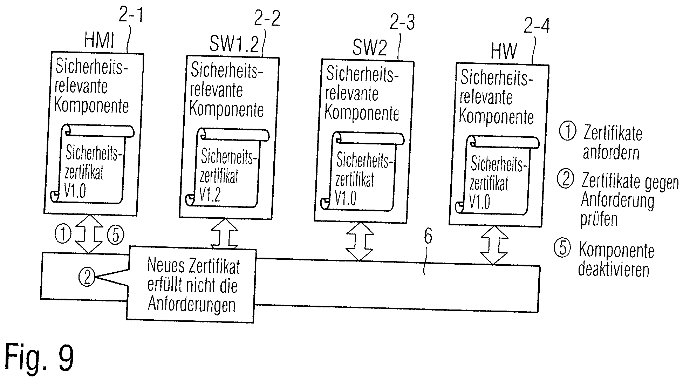

Fig. 9 zeigt eine negativ verlaufende Zertifikatsprüfung gemäß dem erfindungsgemäßen Zertifizierungsverfahren. In dem Beispiel wird die Softwarekomponente 2-2 erneut upgedatet. Bei dem Update der Komponente 2-2 wird die Komponente zunächst isoliert rezertifiziert und erhält ein Sicherheitszertifikat mit der Versionsnummer V1.2, wie in Fig. 9 dargestellt. Sobald die neue bzw. upgedatete Softwarekomponente 2-2 innerhalb der sicherheitskritischen Funktionskette 1 verbaut wird, wird das neue Sicherheitszertifikat V1.2 der sicherheitsrelevanten Komponente 2-2 von dem Sicherheitszertifikatsmanager 6 abgefragt und gemäß den vorgegebenen Sicherheitsanforderungen der Anlage automatisch geprüft. In dem dargestellten Beispiel erfüllt das neue Zertifikat V1.2 nicht die Sicherheitsanforderungen, sodass der Sicherheitszertifikatsmanager 6 automatisch die Komponenten 2-i der sicherheitskritischen Funktionskette 1 deaktiviert. Anschließend kann eine Fehlerbehandlung erfolgen. Die Sicherheitsanforderungen an die sicherheitskritische Funktionskette 1 können beispielsweise neu definiert werden und im Sicherheitszertifikatsmanager 6 hinterlegt werden.

Die Komponentensicherheitszertifikate KSZ und die Schnittstellensicherheitszertifikate SSZ weisen bei einer möglichen Ausführungsform jeweils Sicherheitslevel SL auf. Die Komponentensicherheitslevel KSL, die in den Komponentensicherheitszertifikaten KSZ der Komponenten 2-i angegeben sind, und/oder die Schnittstellensicherheitslevel SSL, die in den Schnittstellensicherheitszertifikaten SSZ der Komponentenschnittstellen der Komponenten 2-i angegeben sind, sind bei einer möglichen Ausführungsform fest vorkonfiguriert für die jeweiligen sicherheitsrelevanten Komponenten. Bei einer alternativen Ausführungsform können sich die Komponentensicherheitslevel KSL und/oder die Schnittstellensicherheitslevel SSL abhängig von Umgebungsbedingungen und/oder von Betriebszuständen der Komponenten 2-i innerhalb der sicherheitskritischen Funktionskette 1 ändern. Beispielsweise besitzt eine sicherheitsrelevante Komponente 2-i in einem ersten Betriebszustand der Komponente 2-i ein hohes Komponentensicherheitslevel KSL1 und in einem anderen Betriebszustand ein niedriges Komponentensicherheitslevel KSL2. Weiterhin kann der Betriebszustand einer Komponente 2-i auch die Schnittstellensicherheitslevel SSL der verschiedenen Schnittstellen der betreffenden Komponente beeinflussen. Beispielsweise besitzt eine Komponentenschnittstelle einer Komponente 2-i in einem ersten Betriebszustand der Komponente ein relativ hohes Schnittstellensicherheitslevel SSL1 und in einem anderen Betriebszustand der Komponente ein relativ niedriges Schnittstellensicherheitslevel SSL2. Die Komponentensicherheitslevel KSL und die Schnittstellensicherheitslevel SSL können sich somit bei dieser Ausführungsform dynamisch in Abhängigkeit von Betriebszuständen und/oder von Umgebungsbedingungen ändern. Bei einer möglichen Ausführungsform werden die Umgebungsbedingungen der Anlage seitens des Sicherheitszertifikatsmanagers 6 sensorisch erfasst. Die Umgebungsbedingungen umfassen beispielsweise physikalische Umgebungsparameter wie Temperatur oder Druck. Die Umgebungsbedingungen können auch die Position bzw. einen Ort der Komponente bzw. der gesamten Anlage umfassen, die auch Einfluss auf die herangezogenen Sicherheitsanforderungen haben. So wird beispielsweise von einer Anlage in einem ersten Temperaturbereich ein anderes Sicherheitslevel verlangt als in einem anderen Temperaturbereich. An eine Komponente, die sich an einem ersten Ort befindet, können höhere Sicherheitsanforderungen gestellt werden als an eine Komponente, die sich an einem anderen Ort befindet. Bei einer Ausführungsform sind die in der Funktionskette 1 verketteten Komponenten 2-i fest verbaut und stehen am selben Ort. Bei einer alternativen Ausführungsform verändern die innerhalb der Funktionskette 1 verketteten Komponenten 2-i relativ zueinander ihre momentane Position. Diese Komponenten sind vorzugsweise über drahtlose Kommunikationsverbindungen mit benachbarten Komponenten verbunden, wobei die Bewegung der Komponente 2-i die Komponentensicherheitslevel KSL der Komponente und/oder die Schnittstellensicherheitslevel SSL der verschiedenen Schnittstellen der betreffenden Komponente 2-i verändern kann. Bei einer Ausführungsform werden die Komponentensicherheitslevel KSL und die Schnittstellensicherheitslevel SSL im Zeitverlauf dekrementiert bzw. vermindert. Dies spiegelt beispielsweise eine Betriebszeit der Komponente wider. Beispielsweise wird ein Komponentensicherheitslevel KSL einer Komponente jährlich dekrementiert. Ab einem gewissen Zeitpunkt genügt das Komponentensicherheitslevel KSL der Komponente nicht mehr dem Sicherheitslevel für diese Komponente entsprechend den vorgegebenen Sicherheitsanforderungen der Anlage. Dann kann beispielsweise angezeigt werden, dass die entsprechende Komponente gewartet oder ausgetauscht werden muss und die Anlage anschließend rezertifiziert werden muss.

Die Komponentensicherheitszertifikate KSZ einer Komponente werden in einem manipulationssicheren Datenspeicher abgespeichert und durch den Sicherheitszertifikatsmanager 6 ausgelesen. Das Komponentensicherheitszertifikat KSZ einer Komponente 2 enthält verschiedene Informationen, die je nach Anwendungsfall variieren können. Bei einer möglichen Ausführungsform weist das Komponentensicherheitszertifikat KSZ einer Komponente 2 innerhalb der sicherheitskritischen Funktionskette 1 einige der folgenden Datenfelder auf, nämlich eine Versionsnummer V und ein Ablaufdatum, die durch den Sicherheitszertifikatsmanager 6 geprüft werden, um festzustellen, ob das Zertifikat noch gültig ist. In einem weiteren Datenfeld ist der Aussteller des Komponentensicherheitszertifikates KSZ angegeben. Das Zertifikat gibt vorzugsweise eine Art der betreffenden Komponente an, beispielsweise, ob es sich um eine Softwarekomponente oder um eine Hardwarekomponente handelt. Weiterhin ist vorzugsweise ein Komponentensicherheitslevel KSL der betreffenden Komponente 2 enthalten. Das Sicherheitslevel kann entweder fest konfiguriert sein oder sich beispielsweise in Abhängigkeit von Umgebungsbedingungen oder Betriebszuständen der Komponenten 2 ändern. Das Komponentensicherheitszertifikat KSZ umfasst vorzugsweise eine Hersteller-Identifizierung des Herstellers der Komponente. Beispielsweise können in einer bestimmten Anlage nur Komponenten eines bestimmten Herstellers zugelassen sein. Ferner enthält das Komponentensicherheitszertifikat KSZ vorzugsweise eine eindeutige Komponentenidentifizierung der betreffenden Komponente. Ferner umfasst das Komponentensicherheitszertifikat KSZ bereitgestellte Schnittstellensicherheitszertifikate SSZ für Komponentenschnittstellen der Komponente mit entsprechenden Schnittstellensicherheitsleveln. Darüber hinaus umfasst das Komponentensicherheitszertifikat KSZ vorzugsweise ferner benötigte Schnittstellensicherheitszertifikate SSZ für Eingabe-Komponentenschnittstellen der Komponente mit einem darin jeweils geforderten Schnittstellensicherheitslevel SSL der Eingabe-Komponentenschnittstelle. Somit kann der Sicherheitszertifikatsmanager 6 prüfen, ob die Sicherheitslevel zueinander passen bzw. kompatibel sind. Darüber hinaus kann das Komponentenschnittstellensicherheitszertifikat KSZ der Komponente 2 verschiedene Konfigurationsparameter der betreffenden Komponente umfassen. Beispielsweise können die Konfigurationsparameter eine zugelassene Laserleistung eines Roboterarmes innerhalb der Fertigungsanlage angeben. Ein Roboterarm hat beispielsweise eine Betriebserlaubnis nur für 50 KW, auch wenn er technisch 100 KW-Leistung bietet. Jede Komponente 2 innerhalb der sicherheitskritischen Funktionskette 1 führt seine Freigabedokumentation in Form eines digitalen Komponentensicherheitszertifikates KSZ mit sich. Vorzugsweise wird für jede Komponente 2 in einem dafür speziell vorgesehenen fälschungssicheren Speicherbereich das zugehörige digitale Zertifikat gespeichert. Dieses kann nur durch einen dafür vorgesehenen Sicherheitszertifikatsmanager 6 ausgelesen und geprüft werden. Mithilfe der elektronisch lesbaren digitalen Zertifikate kann auch während der Laufzeit eine Zertifizierung bzw. Rezertifizierung der sicherheitskritischen Funktionskette 1 automatisch durchgeführt werden.

Bei der in Fig. 6 dargestellten Anlage kann die sicherheitskritische Funktionskette 1 dynamisch verkürzt oder verlängert werden. Beispielsweise wird durch Aufnahme des Werkzeuges 2-5A die sicherheitskritische Funktionskette 1 verlängert. Dies stellt vorzugsweise ein Auslöseereignis dar, das einen Zertifizierungsprozess durch den Sicherheitszertifikatsmanager 6 triggert. Der Sicherheitszertifikatsmanager 6 führt eine Rezertifizierung der verlängerten sicherheitskritischen Funktionskette 1 durch. Bei Abgabe des Werkzeuges 2-5A wird die Funktionskette 1 um eine Hardwarekomponente verkürzt. Dies kann bei einer möglichen Ausführungsform einen erneuten Rezertifizierungsprozess während des Betriebes der Anlage auslösen. Auch ein Nutzer bzw. User kann in den Rezertifizierungsprozess miteinbezogen werden. Beispielsweise kann der Nutzer U als Komponente betrachtet werden, der über ein Sicherheitszertifikat verfügt. Das Sicherheitszertifikat einer Person bzw. eines Nutzers weicht von einem Komponentensicherheitszertifikat einer konventionellen Hardware- oder Softwarekomponente ab. Beispielsweise kann seitens des Sicherheitszertifikatsmanagers 6 automatisch geprüft werden, ob der betreffende Nutzer ein Sicherheitslevel hat, um die Nutzerschnittstelle 2-1 der Anlage zu bedienen. Bei dieser Ausführungsform werden die Nutzer bzw. Bedienpersonen automatisch in den Zertifizierungs- bzw. Rezertifizierungsprozess miteinbezogen. Das Zertifizierungsverfahren zum Zertifizieren einer sicherheitskritischen Funktionskette 1 gemäß dem ersten Aspekt der Erfindung erlaubt, den Aufwand zur Zertifizierung einer sicherheitskritischen Funktionskette 1 deutlich zu reduzieren. Mit dem Zertifizierungsverfahren lassen sich Komponenten einer sicherheitskritischen Funktionskette 1 ersetzen, ohne eine Rezertifizierung der gesamten Funktionskette durchführen zu müssen. Bei einer Änderung innerhalb der sicherheitskritischen Funktionskette 1 kann mithilfe des erfindungsgemäßen Rezertifizierungsverfahrens die Zertifizierung automatisch in kürzester Zeit erfolgen, ohne dass die Betriebserlaubnis der Anlage verfällt.

Gemäß einem zweiten Aspekt der Erfindung wird ein Verfahren zum Bereitstellen einer gesicherten Kommunikationsverbindung KVB zwischen Komponenten 2 einer sicherheitskritischen Funktionskette 1 geschaffen, beispielsweise eine sichere Kommunikationsverbindung 5-i gemäß Fig. 1. Im Bereich der sicherheitskritischen Funktionsketten besteht derzeit kein einheitliches Konzept, welches angibt, wie die einzelnen sicherheitsrelevanten Komponenten 2-i der sicherheitskritischen Funktionsketten 1 innerhalb einer Anlage miteinander zu kommunizieren haben. Durch das Verfahren zum Bereitstellen einer gesicherten Kommunikationsverbindung kann der Aufwand zur Rezertifizierung der Kommunikationsverbindung erheblich reduziert werden. Vor Inbetriebnahme der Anlage befinden sich alle sicherheitskritischen Funktionsketten 1 der Anlage in einem sicheren, vorzugsweise isoliertem, insbesondere geerdeten, Betriebszustand. Dabei weisen die verschiedenen Komponenten 2 innerhalb der sicherheitskritischen Funktionskette 1 einen vordefinierten sicheren Betriebszustand auf, sodass keine ungewollte spontane Kommunikation zwischen den verschiedenen Komponenten entstehen kann.

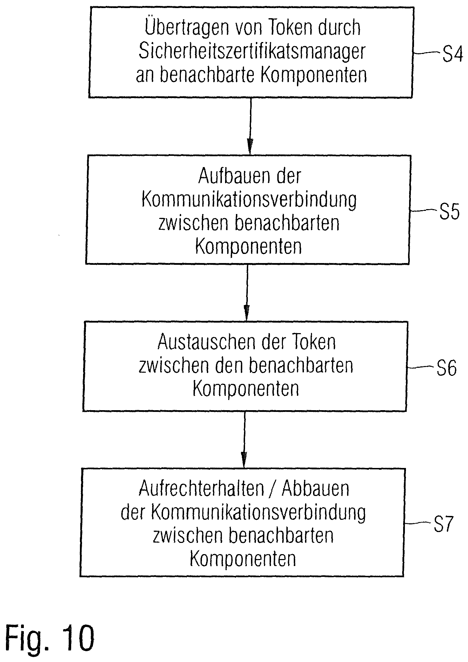

Bei dem Verfahren zum Bereitstellen einer gesicherten Kommunikationsverbindung zwischen Komponenten 2 einer sicherheitskritischen Funktionskette 1 werden zunächst im Schritt S4 identische Token T durch den Sicherheitszertifikatsmanager 6 an benachbarte Komponenten innerhalb der sicherheitskritischen Funktionskette 1 übertragen, wie in Fig. 10 dargestellt. Die beiden benachbarten Komponenten weisen dabei jeweils eine Komponentenschnittstelle für eine Kommunikationsverbindung mit der jeweils anderen benachbarten Komponente auf. Es werden anschließend die Komponentenschnittstellen der beiden benachbarten Komponenten innerhalb der sicherheitskritischen Funktionskette 1 im Schritt S5 zum Aufbau der betreffenden Kommunikationsverbindung zwischen den beiden benachbarten Komponenten aktiviert. Anschließend erfolgt in einem weiteren Schritt S6 ein gegenseitiges Austauschen der jeweils von dem Sicherheitszertifikatsmanager 6 durch die beiden benachbarten Komponenten erhaltenen Token T über die aufgebaute Kommunikationsverbindung. Die aufgebaute Kommunikationsverbindung zwischen den beiden benachbarten Komponenten der sicherheitskritischen Funktionskette 1 wird im Schritt S7 aufrechterhalten, falls die über die Kommunikationsverbindung zwischen den beiden benachbarten Komponenten ausgetauschten Token T identisch mit den von dem Sicherheitszertifikatsmanager 6 erhaltenen Token T sind. Bei einer möglichen Ausführungsform besitzen die an die beiden benachbarten Komponenten der sicherheitskritischen Funktionskette 1 übertragenen Token einen Ablaufzeitpunkt. Die Kommunikationsverbindung zwischen den beiden benachbarten Komponenten der sicherheitskritischen Funktionskette 1 kann nach Erreichen des Ablaufzeitpunktes des Tokens T entsprechend einem vorgegebenen Sicherheitslevel automatisch abgebaut werden, insbesondere durch Deaktivierung einer Schnittstelle. Die über die zwischen den beiden Komponenten aufgebaute Kommunikationsverbindung übermittelten Daten werden vorzugsweise entsprechend einem Sicherheitslevel verschlüsselt übertragen. Das Sicherheitslevel kann ein Komponentensicherheitslevel KSL einer Komponente 2 sein, das in einem Komponentensicherheitszertifikat KSZ der entsprechenden Komponente 2 angegeben ist. Das Sicherheitslevel kann ferner das Sicherheitslevel einer Komponentenschnittstelle der betreffenden Komponente sein, das in dem Schnittstellensicherheitszertifikat SSZ der Komponentenschnittstelle angegeben ist. Vorzugsweise versendet der Sicherheitszertifikatsmanager 6 nach Freigabe aller Komponenten der sicherheitskritischen Funktionskette 1 eine TAN-Liste an die Komponenten 2 der sicherheitskritischen Funktionskette 1. Die versendete TAN-Liste wird durch die Komponenten 2-i zur Verschlüsselung und/oder Entschlüsselung der über die Kommunikationsverbindung übertragenen Daten verwendet. Die versendete TAN-Liste weist vorzugsweise eine Listennummer und eine vorgegebene Anzahl von einmalig verwendbaren TAN-Nummern zur Kommunikation auf. Bei analogen Schnittstellen kann eine Verschlüsselung entfallen. Falls die Transaktionsnummern innerhalb der TAN-Liste zuneige gehen, kann die sicherheitskritische Funktionskette 1 diesen Umstand an den Sicherheitszertifikatsmanager 6 melden, der eine neue TAN-Liste an die Komponenten aussendet. Eine von dem Sicherheitszertifikatsmanager 6 übertragene Nachricht kann eine Nachrichten-ID, einen Zeitstempel, eine Checksumme über entschlüsselte Datencontainer, eine Listennummer der versendeten TAN-Liste, ein Element der TAN-Liste sowie einen verschlüsselten Datencontainer umfassen. Die TAN-Listennummer und die TAN-Elementnummer ist zu Aufzeichnungszwecken Bestandteil jeder Nachricht, die über die Kommunikationsverbindung übertragen wird. Die TAN-Nummer kann aus der TAN-Liste entweder sequenziell oder auch per Pseudozufallszahl ausgewählt werden. Jede TAN-Nummer wird vorzugsweise nur einmal verwendet. Die Länge der TAN-Nummer legt die Güte der Verschlüsselung fest. Eine Prüfsumme über den Datencontainer wird mit der TAN-Nummer verschlüsselt und kann dem Kommunikationspartner bzw. an die benachbarte Komponente übertragen werden. Der Empfänger vergleicht anschließend seine TAN-Liste/TAN-Position mit der in der empfangenen Nachricht. Die empfangene Nachricht wird nach erfolgreicher CRC-Prüfung als gültig angesehen werden und wird durch die Komponente weiterverarbeitet. Sind die beiden Parameter nicht identisch, wird die Nachricht seitens der Komponente verworfen, wobei bei dem Sicherheitszertifikatsmanager 6 eine Warnung ausgelöst werden kann.

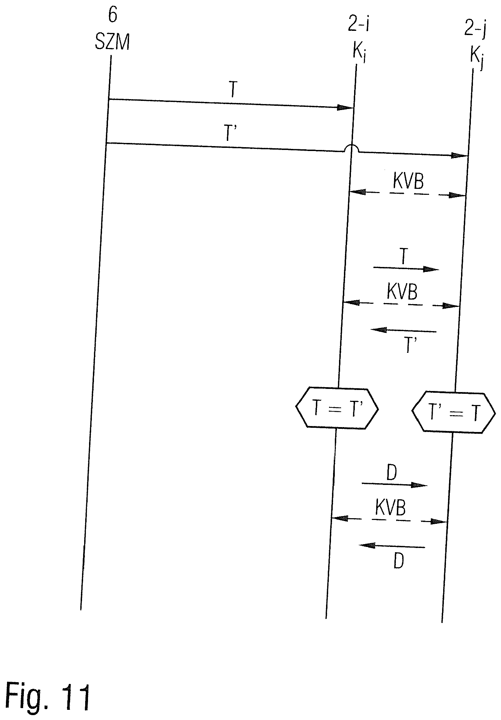

Fig. 11 zeigt ein Signalablaufdiagramm zur Erläuterung der Funktionsweise des erfindungsgemäßen Verfahrens zum Bereitstellen einer gesicherten Kommunikationsverbindung zwischen Komponenten einer sicherheitskritischen Funktionskette 1 gemäß dem zweiten Aspekt der Erfindung. Der Sicherheitszertifikatsmanager 6 überträgt zunächst ein identisches Token T, T' an zwei benachbarte Komponenten 2-1, 2-j der sicherheitskritischen Funktionskette 1, wie sie beispielsweise in Fig. 1 dargestellt ist. Die vorgesehenen Komponentenschnittstellen der beiden benachbarten Komponenten 2-i, 2-j dienen zum Aufbau einer Kommunikationsverbindung KVB zwischen den beiden benachbarten Komponenten, wie in Fig. 11 gezeigt. Zunächst aktiviert die erste Komponente 2-i eine Ausgabe-Komponentenschnittstelle und die zweite benachbarte Komponente 2-j eine Eingabe-Komponentenschnittstelle zum Aufbau der Kommunikationsverbindung KVB zwischen den beiden Komponenten. Daraufhin erfolgt ein Austausch der jeweils von dem Sicherheitszertifikatsmanager 6 durch die beiden Komponenten 2-i, 2-j erhaltenen Token T, T' über die aufgebaute Kommunikationsverbindung KVB. Es wird einerseits durch die erste Komponente 2-i und andererseits durch die zweite Komponente 2-j geprüft, ob das mit der jeweils anderen Komponente ausgetauschte Token T mit dem ursprünglich erhaltenen Token identisch ist. Falls die über die Kommunikationsverbindung KVB zwischen den beiden benachbarten Komponenten 2-i, 2-j ausgetauschten Token T identisch mit den von dem Sicherheitszertifikatsmanager 6 erhaltenen Token sind, wird die zwischen den beiden benachbarten Komponenten der sicherheitskritischen Funktionskette 1 aufgebaute Kommunikationsverbindung KVB aufrechterhalten, wie in Fig. 11 dargestellt. Über die Kommunikationsverbindung KVB können anschließend Daten vorzugsweise in verschlüsselter Form ausgetauscht werden. Kommt die erste Komponente 2-i zu dem Schluss, dass das von der anderen Komponente 2-j empfangene Token T' und das von dem Sicherheitszertifikatsmanager 6 ursprünglich erhaltene Token T abweichen, kann es seine Ausgabe-Komponentenschnittstelle deaktivieren, sodass die aufgebaute Kommunikationsverbindung KVB abgebaut wird. In gleicher Weise kann die zweite Komponente 2-j prüfen, ob das von ihr über die Kommunikationsverbindung erhaltene Token T mit dem von dem Sicherheitszertifikatsmanager 6 erhaltenen Token T' identisch ist. Falls dies nicht der Fall ist, kann die zweite Komponente 2-j ihre Eingabe-Komponentenschnittstelle deaktivieren, sodass die Kommunikationsverbindung KVB automatisch abgebaut wird und / oder eine Fehlermeldung an den Sicherheitszertifikatsmanager SZM übertragen wird.

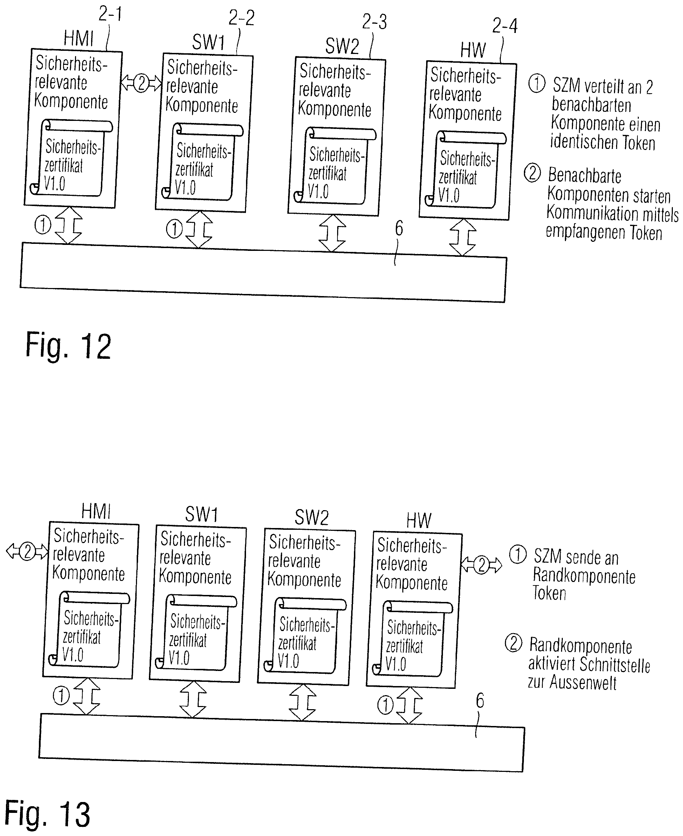

Der Sicherheitszertifikatsmanager 6 der Anlage kann Kommunikationsverbindungen KVB schrittweise nach und nach aktivieren, bis die Randkomponenten der Anlage erreicht sind. Die Randkomponenten sind die Komponenten an den Systemgrenzen der Anlage bzw. des Systems. Fig. 13 zeigt schematisch die Aktivierung einer Komponentenschnittstelle einer Randkomponente, beispielsweise der Komponenten 2-1, 2-4. Der Sicherheitszertifikatsmanager 6 sendet das Token T an die Randkomponente, die eine Komponentenschnittstelle zur Außenwelt, d.h. an der Systemgrenze, aktiviert, wie in Fig. 13 schematisch dargestellt.

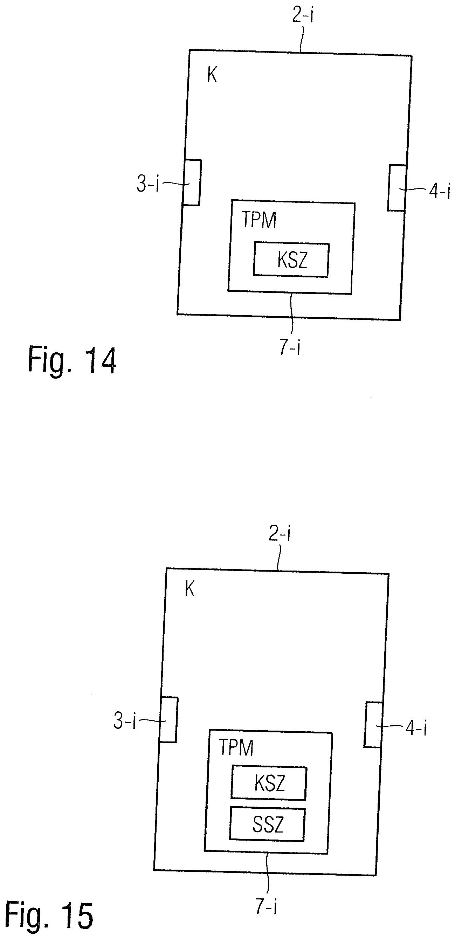

Die Erfindung schafft ferner gemäß einem dritten Aspekt eine Komponente 2-i für eine sicherheitskritische Funktionskette 1, wie sie schematisch in den Figuren 14, 15 dargestellt ist. Die Komponente 2-i besitzt dabei ein zugehöriges Komponentensicherheitszertifikat KSZ, das in einem zugehörigen manipulationssicheren Speicherbereich eines Datenspeichers gespeichert ist und zur Freigabe der Komponente 2-i innerhalb der sicherheitskritischen Funktionskette 1 durch einen Sicherheitszertifikatsmanager 6 verifizierbar ist. Bei einer bevorzugten Ausführungsform der erfindungsgemäßen Komponente ist das gespeicherte Komponentensicherheitszertifikat KSZ durch den Sicherheitszertifikatsmanager 6 der Anlage auslesbar und anhand vorgegebener Sicherheitsanforderungen hinsichtlich seiner Gültigkeit überprüfbar. Der Speicherbereich zum Speichern des Komponentensicherheitszertifikates der Komponente ist vorzugsweise in einem manipulationssicheren Datenspeicher vorgesehen, der in der Komponente integriert ist, wie in den Figuren 14, 15 dargestellt. Der in der Komponente integrierte Datenspeicher, der zur Speicherung des Komponentensicherheitszertifikates KSZ vorgesehen ist, ist vorzugsweise ein Trusted Platform Module 7, wie in den Figuren 14, 15 gezeigt. Bei einer alternativen Ausführungsvariante befindet sich der Speicherbereich zum Speichern des Komponentensicherheitszertifikates KSZ der Komponente 2 in einem manipulationssicheren Datenspeicher, der nicht in der Komponente 2 selbst integriert ist, sondern einen externen Datenspeicher bildet, der vorzugsweise durch eine Speicheradresse referenziert ist und auf den der Sicherheitszertifikatsmanager 6 Zugriff hat. Wie in Fig. 4 dargestellt, kann sich in dem Trusted Platform Module 7 der Komponente 2 das zugehörige Komponentensicherheitszertifikat KSZ der Komponente 2-i befinden, welches durch den Sicherheitszertifikatsmanager 6 zur Prüfung auslesbar ist.

Weiterhin kann sich in dem Trusted Platform Module 7-i der Komponente neben dem Komponentensicherheitszertifikat KSZ auch Komponentenschnittstellensicherheitszertifikate SSZ befinden, die durch den Sicherheitszertifikatsmanager 6 zur Prüfung auslesbar sind.

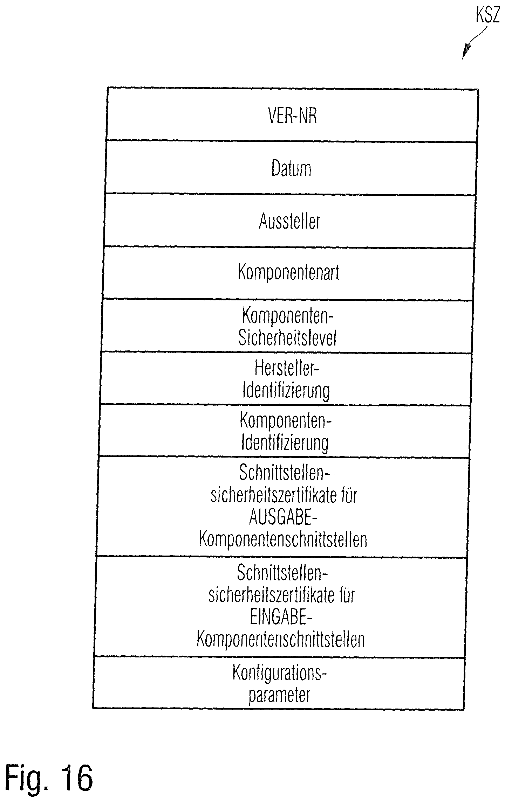

Fig. 16 zeigt schematisch eine Datenstruktur eines Ausführungsbeispiels eines Komponentensicherheitszertifikates KSZ, wie es in einem manipulationssicheren Datenspeicher 7 der erfindungsgemäßen Komponente 2 gespeichert sein kann. Das Komponentensicherheitszertifikat KSZ der Komponente 2 umfasst dabei eine Versionsnummer des Komponentensicherheitszertifikates, ein Ausgabedatum des Komponentensicherheitszertifikates, einen Aussteller des Komponentensicherheitszertifikates, eine Komponentenart der Komponente, ein Komponentensicherheitslevel KSL der Komponente, eine Hersteller-Identifizierung zur Identifizierung des Herstellers der Komponente, eine Komponentenidentifizierung der Komponente, Schnittstellensicherheitszertifikate SSZ für Ausgabe-Komponentenschnittstellen der Komponente mit einem darin jeweils angebotenen Schnittstellensicherheitslevel SSL der jeweiligen Ausgabe-Komponentenschnittstelle, Schnittstellensicherheitszertifikate SSZ für Eingabe-Komponentenschnittstellen der Komponente mit einem darin jeweils geforderten Schnittstellensicherheitslevel SSL der jeweiligen Eingabe-Komponentenschnittstelle sowie Konfigurationsparameter der betreffenden Komponente.

Bei einer möglichen Ausführungsform ist für jede Komponentenschnittstelle der Komponente 2 ein zugehöriges Schnittstellensicherheitszertifikat SSZ vorgesehen und in dem Trusted Platform Module 7 der Komponente manipulationssicher gespeichert. Bei dem erfindungsgemäßen System, wie es schematisch beispielhaft in Fig. 1 dargestellt ist, kann ein zentraler Sicherheitszertifikatsmanager 6 die Sicherheitszertifikate aller Komponenten und Schnittstellen verifizieren. Die Komponenten 2 einer Anlage bzw. eines Systems können bei einer Ausführungsvariante über eine gesicherte Schnittstelle miteinander kommunizieren, wobei die Anlage erst dann aktiviert wird, wenn alle sicherheitskritischen Funktionsketten 1 den Sicherheitsanforderungen genügen. Die Anzahl der verschiedenen Sicherheitslevel, die verwendet werden, kann variieren. Bei den digitalen Sicherheitszertifikaten kann es sich bei einer möglichen Ausführungsvariante um Public Key-Sicherheitszertifikate handeln. Die digitalen Zertifikate können bei einer möglichen Ausführungsform von einer Zertifizierungsinstanz ausgestellt werden. Die bei dem erfindungsgemäßen System verwendeten digitalen Sicherheitszertifikate, d.h. die Komponentensicherheitszertifikate KSZ und die Schnittstellensicherheitszertifikate SSZ, stellen digitale Datensätze dar, die bestimmte Eigenschaften von Objekten bzw. Komponenten bestätigen, wobei die Authentizität und Integrität der Angaben durch kryptografische Verfahren geprüft werden kann. Die Anlage ist beispielsweise eine Industrieanlage mit mindestens einer sicherheitskritischen Funktionskette 1, die aus mehreren miteinander verketteten Komponenten 2-i besteht. Dabei kann es sich um eine Anlage mit einer Vielzahl von verketteten Software- und/oder Hardwarekomponenten handeln. Ferner kann es sich bei der Anlage beispielsweise um ein Fahrzeug mit einer Vielzahl von darin integrierten Software- und/oder Hardwarekomponenten handeln. Die Erfindung schafft ferner einen Sicherheitszertifikatsmanager 6 für eine derartige sicherheitskritische Funktionskette 1, wobei der Sicherheitszertifikatsmanager 6 nach erfolgreicher Prüfung von Komponentensicherheitszertifikaten KSZ und von Komponentenschnittstellensicherheitszertifikaten SSZ die sicherheitskritische Funktionskette 1 automatisch freigibt. Der Sicherheitszertifikatsmanager 6 kann Teil der komplexen Anlage sein oder mit der zu zertifizierenden Anlage verbunden werden. Bei einer Ausführungsvariante ist der Sicherheitszertifikatsmanager 6 über ein Datennetzwerk mit einer entfernten zu zertifizierenden Anlage verbunden. Ferner kann der Sicherheitszertifikatsmanager 6 auch in einem lokalen Server der Anlage implementiert sein. Weiterhin kann der Sicherheitszertifikatsmanager 6 bei einer weiteren Ausführungsvariante in einer Komponente 2-i der sicherheitskritischen Funktionskette 1 selbst integriert sein. Bei einer weiteren Ausführungsvariante bildet der Sicherheitszertifikatsmanager 6 ebenfalls eine Komponente, d.h. der Sicherheitszertifikatsmanager 6 kann bei einer Ausführungsvariante eine Selbstüberprüfung ausführen, um zu überprüfen, ob er selbst noch den vorgegebenen Sicherheitsanforderungen entspricht.

### Bezugszeichenliste

- 1: Funktionskette
- 2: Komponente
- 3: Eingabe - Komponentenschnittstelle
- 4: Ausgabe - Komponentenschnittstelle
- 5: Kommunikationsverbindungen
- 6: Sicherheitszertifikatsmanager
- 7: manipulationssicherer Datenspeicher

## Patentansprüche

1. Verfahren zum Zertifizieren einer sicherheitskritischen Funktionskette (1), die mehrere miteinander über Kommunikationsverbindungen (KVB) verkettete Komponenten (2) zur Bereitstellung einer Sicherheitsfunktion aufweist, mit den folgenden Schritten:
(a) Prüfen (S1) von Komponentensicherheitszertifikaten, KSZ, der verketteten Komponenten (2) durch einen Sicherheitszertifikatsmanager (6) anhand vorgegebener Sicherheitsanforderungen;
(b) Prüfen (S2) von mindestens ein Schnittstellensicherheitslevel, SSL, der Komponentenschnittstelle angebenden Schnittstellensicherheitszertifikaten, SSZ, von Komponentenschnittstellen der miteinander verketteten Komponenten (2) durch den Sicherheitszertifikatsmanager (6); und
(c) Freigeben (S3) der Komponenten (2) der sicherheitskritischen Funktionskette (1) durch den Sicherheitszertifikatsmanager (6), falls die Komponentenzertifikatsprüfung und die Schnittstellenzertifikatsprüfung erfolgreich sind,
**dadurch gekennzeichnet, dass** im Zuge der Schnittstellenzertifikatsprüfung (S2) die SSZ der beiden über eine Kommunikationsverbindung (KVB) verbundenen Komponentenschnittstellen von zwei innerhalb der sicherheitskritischen Funktionskette (1) benachbarter Komponenten (2) dahingehend geprüft werden, ob die darin jeweils angegebenen SSL zueinander kompatibel sind.

2. Verfahren nach Anspruch 1,
wobei eine Kommunikationsverbindung (KVB) zwischen zwei Komponentenschnittstellen zweier innerhalb der sicherheitskritischen Funktionskette (1) benachbarter Komponenten (2) drahtlos oder drahtgebunden ist.

3. Verfahren nach einem der vorangehenden Ansprüche 1 und 2,
wobei das SSZ einer Komponentenschnittstelle ein minimales SSL und/oder ein maximales SSL der jeweiligen Komponentenschnittstelle angibt.

4. Verfahren nach einem der vorangehenden Ansprüche 1 bis 3,
wobei eine Kommunikationsverbindung (KVB) eine Ausgabe-Komponentenschnittstelle (4) einer ersten Komponente mit einer Eingabe-Komponentenschnittstelle (3) einer zweiten Komponente drahtlos oder drahtgebunden verbindet,
wobei im Zuge der Schnittstellenzertifikatsprüfung (S2) jeweils geprüft wird, ob das von der Ausgabe-Komponentenschnittstelle (4) der ersten Komponente angebotene SSL, welches in dem SSZ der Ausgabe-Komponentenschnittstelle der ersten Komponente angegeben ist, für das von der Eingabe-Komponentenschnittstelle (3) der zweiten Komponente geforderte SSL, welches in dem SSZ der Eingabe-Komponentenschnittstelle der zweiten Komponente angegeben ist, genügend ist.

5. Verfahren nach einem der vorangehenden Ansprüche 1 bis 4,
wobei im Zuge der Komponentensicherheitszertifikatsprüfung (S1) einer Komponente (2) durch den Sicherheitszertifikatsmanager (6) geprüft wird, ob ein Komponentensicherheitslevel, KSL, der Komponente (2), welches in dem KSZ der betreffenden Komponente (2) angegeben ist, für ein gemäß der vorgegebenen Sicherheitsanforderungen gefordertes KSL der Komponente (2) genügend ist.

6. Verfahren nach einem der vorangehenden Ansprüche 1 bis 5,
wobei das KSZ einer Komponente (2) und die SSZ der Komponentenschnittstellen der Komponente (2) in einem manipulationssicheren Datenspeicher (7) abgespeichert sind und zu ihrer Prüfung an den Sicherheitszertifikatsmanager (6) übertragen werden.

7. Verfahren nach Anspruch 6,
wobei die KSL die in den KSZ der Komponenten (2) angegeben sind, und/oder die Schnittstellensicherheitslevel, SSL, die in den SSZ der Komponentenschnittstellen der Komponenten (2) angegeben sind, fest konfiguriert sind oder sich abhängig von Umgebungsbedingungen und/oder Betriebszuständen der Komponenten (2) der sicherheitskritischen Funktionskette (1) ändern.

8. Verfahren nach einem der vorangehenden Ansprüche 1 bis 7,
wobei der Sicherheitszertifikatsmanager (6) eine Anforderungsnachricht (REQ) zur Übertragung des KSZ einer Komponente (2) sowie zur Übertragung der SSZ der Komponentenschnittstellen der betreffenden Komponente (2) an die jeweilige Komponente (2) überträgt.

9. Verfahren nach einem der vorangehenden Ansprüche 1 bis 8,
wobei die Komponentenschnittstellen einer freigegebenen Komponente (2) durch die freigegebene Komponente (2) selbst oder durch den Sicherheitszertifikatsmanager (6) logisch oder physikalisch aktiviert werden.

10. Verfahren nach einem der vorangehenden Ansprüche 1 bis 9,
wobei das Zertifizieren der sicherheitskritischen Funktionskette (1) automatisch in Reaktion auf ein erkanntes Auslöseereignis erfolgt,
wobei das Auslöseereignis eine Inbetriebnahme mindestens einer Komponente (2) der sicherheitskritischen Funktionskette (1), einen Betriebszustandswechsel mindestens einer Komponente (2) der sicherheitskritischen Funktionskette (1), einen Austausch mindestens einer Komponente (2) der sicherheitskritischen Funktionskette (1) und/oder ein Update einer Softwarekomponente (2) der sicherheitskritischen Funktionskette (1) aufweist.

11. Verfahren nach einem der vorangehenden Ansprüche 1 bis 10,
wobei ein KSZ einer Komponente (2) innerhalb der sicherheitskritischen Funktionskette (1) aufweist:
- eine Versionsnummer des Komponentensicherheitszertifikates,
- ein Ausgabedatum des Komponentensicherheitszertifikates,
- einen Aussteller des Komponentensicherheitszertifikates,
- eine Art der betreffenden Komponente,
- ein Komponentensicherheitslevel, KSL, der Komponente,
- eine Hersteller-Identifizierung des Herstellers der Komponente,
- eine Komponentenidentifizierung der Komponente,
- bereitgestellte SSZ für Ausgabe-Komponentenschnittstellen der Komponente mit einem darin jeweils angebotenen SSL der Ausgabe-Komponentenschnittstelle,
- benötigte SSZ für Eingabe-Komponentenschnittstellen der Komponente mit einem darin jeweils geforderten SSL der Eingabe-Komponentenschnittstelle und
- Konfigurationsparameter der Komponente.

12. Sicherheitszertifikatsmanager (6) für eine sicherheitskritische Funktionskette (1), die mehrere miteinander über Kommunikationsverbindungen (KVB) verkettete Komponenten (2) aufweist, wobei der Sicherheitszertifikatsmanager (6) nach erfolgreicher Prüfung von Komponentensicherheitszertifikaten, KSZ, der Komponenten (2) und von mindestens ein Schnittstellensicherheitslevel, SSL, der Komponentenschnittstelle angebenden Schnittstellensicherheitszertifikaten, SSZ, von Komponentenschnittstellen der Komponenten (2) die Komponenten (2) der sicherheitskritischen Funktionskette (1) automatisch freigibt, **dadurch gekennzeichnet, dass** der Sicherheitszertifikatsmanager (6) im Zuge der Schnittstellenzertifikatsprüfung (S2) die SSZ der beiden über eine Kommunikationsverbindung (KVB) verbundenen Komponentenschnittstellen von zwei innerhalb der sicherheitskritischen Funktionskette (1) benachbarter Komponenten (2) dahingehend prüft, ob die darin jeweils angegebenen SSL zueinander kompatibel sind.

13. Anlage mit einer sicherheitskritischen Funktionskette (1), die mehrere miteinander über Kommunikationsverbindungen (KVB) verkettete Komponenten (2) aufweist, und mit einem Sicherheitszertifikatsmanager (6) nach Anspruch 12.

## Claims

1. Method for certifying a safety-critical function chain (1) which has a plurality of components (2) chained together via communications links (KVB) to provide a safety function, comprising the following steps:
a) checking (S1) of component safety certificates, CSCs, of the chained components (2) by a safety certificate manager (6) using specified safety requirements;
b) checking (S2), by the safety certificate manager (6), of at least one interface safety level, ISL, of the interface safety certificates, ISCs, which specify the component interface, of component interfaces of the components (2) which are chained together; and
c) enabling (S3) of the components (2) of the safety-critical function chain (1) by the safety certificate manager (6) if the component certificate checking and the interface certificate checking are successful,
**characterised in that**, in the course of the safety certificate checking (S2), the ISCs of the two component interfaces, connected via a communications link (KVB), of two components (2) which are adjacent within the safety-critical function chain (1) are checked as to whether the ISLs respectively specified therein are mutually compatible.

2. Method according to claim 1,
wherein a communications link (KVB) between two component interfaces of two components (2) which are adjacent within the safety-critical function chain (1) is wired or wireless.

3. Method according to either of preceding claims 1 and 2,
wherein the ISC of a component interface specifies a minimum ISL and/or a maximum ISL of the component interface in question.

4. Method according to any of preceding claims 1 to 3,
wherein a communications link (KVB) connects an output component interface (4) of a first component to an input component interface (3) of a second component in a wired or wireless manner,
wherein, in the course of the interface certificate checking (S2), it is in each case checked whether the ISL offered by the output component interface (4) of the first component and specified in the ISC of the output component interface of the first component is sufficient for the ISL required by the input component interface (3) of the second component and specified in the ISC of the input component interface of the second component.

5. Method according to any of preceding claims 1 to 4,
wherein, in the course of the component safety certificate checking (S1) of a component (2) by the safety certificate manager (6), it is checked whether a component safety level, CSL, of the component (2) specified in the CSC of the relevant component (2) is sufficient for a CSL, required according to the safety requirements, of the component (2).

6. Method according to any of preceding claims 1 to 5,
wherein the CSC of a component (2) and the ISCs of the component interfaces of the component (2) are stored in a manipulation-proof data store (7) and are transmitted to the safety certificate manager (6) for checking.

7. Method according to claim 6,
wherein the CSLs specified in the CSCs of the components (2) and/or the interface safety levels, ISLs, specified in the ISCs of the component interfaces of the components (2) are fixedly configured or vary as a function of ambient conditions and/or operating states of the components (2) of the safety-critical function chain (1).

8. Method according to any of preceding claims 1 to 7,
wherein the safety certificate manager (6) transmits a request message (REQ), for the transmission of the CSC of a component (2) and for the transmission of the ISCs of the component interfaces of the relevant component (2), to the component (2) in question.

9. Method according to any of preceding claims 1 to 8,
wherein the component interfaces of an enabled component (2) are logically or physically activated by the enabled component (2) itself or by the safety certificate manager (6) .

10. Method according to any of preceding claims 1 to 9,
wherein the safety-critical function chain (1) is certified automatically in reaction to a detected triggering event, wherein the triggering event includes start-up of at least one component (2) of the safety-critical function chain (1), a change in operating state of at least one component (2) of the safety-critical function chain (1), replacement of at least one component (2) of the safety-critical function chain (1) and/or an update to a software component (2) of the safety-critical function chain (1).

11. Method according to any of preceding claims 1 to 10,
wherein a CSC of a component (2) within the safety-critical function chain (1) includes:
- a version number of the component safety certificate,
- a date of issue of the component safety certificate,
- an issuer of the component safety certificate,
- a type of the relevant component,
- a component safety level, CSL, of the component,
- a manufacturer identifier for the manufacturer of the component,
- a component identifier for the component,
- provided ISCs for output component interfaces of the component, including an ISL, offered therein in each case, of the output component interface,
- required ISCs for input component interfaces of the component, including an ISL, required therein in each case, of the input component interface, and
- configuration parameters of the component.

12. Safety certificate manager (6) for a safety-critical function chain (1) which has a plurality of components (2) chained together via communications links (KVB), wherein, after successful testing of component safety certificates, CSCs, of the components (2) and interface security certificates, ISCs, of the components (2), which specify at least one interface safety level, ISL, of the component interface, the safety certificate manager (6) enables the components (2) of the safety-critical function chain (1), **characterised in that**, in the course of the interface certificate testing (S2), the safety certificate manger (6) checks the ISCs of the two component interfaces, connected via a communications link (KVB), of two components (2) which are adjacent within the safety-critical function chain (1) as to whether the ISLs respectively specified therein are mutually compatible.

13. System comprising a safety-critical function chain (1), which has a plurality of components (2) chained together via communications links (KVB), and comprising a safety certificate manager (6) according to claim 12.

## Revendications

1. Procédé de certification d'une chaîne de fonction vitale (1), comportant plusieurs composants (2) concaténés l'un à l'autre par des liaisons de communication (LC) afin d'effectuer une fonction de sécurité, doté des étapes suivantes :
(a) vérifier (S1) les certificats de sécurité de composant (CSC) des composants concaténés (2) par le biais d'un gestionnaire de certificats de sécurité (6) à l'aide de conditions de sécurité prédéfinies ;
(b) vérifier (S2) au moins un niveau de sécurité d'interface (NSI) des certificats de sécurité d'interface (CSI) abordant l'interface de composant des interfaces des composants (2) concaténés les uns avec les autres par le biais du gestionnaire de certificats de sécurité (6) ; et
(c) autoriser (S3) les composants (2) de la chaîne de fonction vitale (1) par le biais du gestionnaire de certificats de sécurité (6), dans le cas où la vérification des certificats des composants et la vérification des certificats des interfaces sont réussies,
**caractérisé en ce que** lors de la vérification des certificats des interfaces (S2) les CSI des deux interfaces de composant connectées par une liaison de communication (LC) de deux composants (2) adjacents au sein de la chaîne de fonction vitale (1) sont vérifiés pour savoir si les SSL ainsi donnés sont compatibles l'un à l'autre.

2. Procédé selon la revendication 1,
dans lequel une liaison de communication (LC) entre deux interfaces de composants de deux composants (2) adjacents au sein de la chaîne de fonction vitale (1) est filaire ou sans fil.

3. Procédé selon l'une des revendications précédentes 1 ou 2,
dans lequel le CSI d'une interface de composant fournit un CSI minimal et/ou un CSI maximal des interfaces de composants respectives.

4. Procédé selon l'une des revendications précédentes 1 à 3,
dans lequel une liaison de communication (LC) connecte une interface d'émission (4) d'un premier composant et une interface de saisie (3) d'un deuxième composant de manière filaire ou sans fil, dans lequel il est vérifié lors de la vérification des certificats de sécurité des interfaces (S2) si le NSI offert par l'interface d'émission (4) du premier composant, lequel est donné dans le CSI de l'interface d'émission (4) du premier composant, est suffisant par rapport au NSI exigé par l'interface de saisie (3) du deuxième composant, lequel est donné dans le CSI de l'interface de saisie (3) du deuxième composant.

5. Procédé selon l'une des revendications précédentes 1 à 4,
dans lequel lors de la vérification des certificats de sécurité (S1) d'un composant (2) par le biais du gestionnaire de certificats de sécurité (6) il est vérifié si un niveau de sécurité de composant (NSC) du composant (2), lequel est donné dans le CSC du composant (2) en question, est suffisant pour un NSC du composant (2) exigé selon les exigences de sécurité prédéfinies.

6. Procédé selon l'une des revendications précédentes 1 à 5,
dans lequel le CSC d'un composant (2) et le CSI des interfaces du composant (2) sont enregistrés dans une mémoire inviolable (7), et sont communiqués au gestionnaire de certificats de sécurité (6) pour leur vérification.

7. Procédé selon la revendication 6,
dans lequel les NSC qui sont donnés dans les CSC des composants (2) et/ou les NSI qui sont donnés dans les CSI des interfaces des composants (2) sont préconfigurés ou varient en fonction de conditions environnementales et/ou d'états de fonctionnement des composants (2) de la chaîne de fonction vitale (1).

8. Procédé selon l'une des revendications précédentes 1 à 7,
dans lequel le gestionnaire de certificats de sécurité (6) communique un message de requête (REQ) pour la communication du CSC d'un composant (2) ainsi que pour la communication du CSI de l'interface du composant (2) en question au composant (2) respectif.

9. Procédé selon l'une des revendications précédentes 1 à 8,
dans lequel les interfaces de composant d'un composant autorisé (2) sont activées logiquement ou physiquement par le composant autorisé (2) lui-même ou par le biais du gestionnaire de certificats de sécurité (6).

10. Procédé selon l'une des revendications précédentes 1 à 9, dans lequel la certification de la chaîne de fonction vitale (1) s'effectue automatiquement en réaction à un événement déclencheur décelé,
dans lequel l'événement déclencheur comporte une mise en service d'au moins un composant (2) de la chaîne de fonction vitale (1), un changement d'état de fonctionnement d'au moins un composant (2) de la chaîne de fonction vitale (1), une interaction d'au moins un composant (2) de la chaîne de fonction vitale (1) et/ou une mise à jour d'un composant logiciel (2) de la chaîne de fonction vitale (1).

11. Procédé selon l'une des revendications précédentes 1 à 10, dans lequel un CSC d'un composant (2) au sein de la chaîne de fonction vitale (1) comporte :
- un numéro de version du certificat de sécurité du composant,
- une date d'émission du certificat de sécurité du composant,
- un émetteur du certificat de sécurité du composant,
- une catégorie du composant en question,
- un niveau de sécurité de composant (NSC) du composant,
- un identifiant fabricant du fabricant du composant, un identifiant composant du composant,
- des CSI créés pour des interfaces d'émission des composants dotées d'un NSI de l'interface d'émission du composant respectivement offert,
- des CSI créés pour des interfaces de saisie des composants dotées d'un NSI de l'interface de saisie du composant respectivement exigé et
- des paramètres de configuration des composants.

12. Gestionnaire de certificats de sécurité (6) pour une chaîne de fonction vitale (1), comportant plusieurs composants (2) concaténés l'un à l'autre par des liaisons de communication (LC), dans lequel le gestionnaire de certificats de sécurité (6) autorise automatiquement les composants (2) de la chaîne de fonction vitale (1), après vérification réussie des certificats de sécurité de composant (CSC) des composants (2) et d'au moins un niveau de sécurité d'interface (NSI) des certificats de sécurité d'interface (CSI) abordant l' interface de composant des interfaces des composants (2), **caractérisé en ce que** le gestionnaire de certificats de sécurité (6) vérifie, lors de la vérification des certificats des interfaces (S2), les CSI des deux interfaces de composant connectées par une liaison de communication (LC) de deux composants (2) adjacents au sein de la chaîne de fonction vitale (1) pour savoir si les SSL ainsi donnés sont compatibles l'un à l'autre.

13. Installation dotée d'une chaîne de fonction vitale (1) comportant plusieurs composants (2) concaténés l'un à l'autre par des liaisons de communication (LC) et dotée d'un gestionnaire de certificats de sécurité (6) selon la revendication 12.
